# EUROPEAN PATENT APPLICATION

(11) **EP 4 317 814 A1**
(43) Date of publication of application: **07.02.2024**
(21) Application number: 22779838.6
(22) Date of filing: 07.03.2022
(51) Int. Cl.: F24F 9/00, B60S 1/62

(54) **CLEANER SYSTEM, PROGRAM, CLEANER CONTROL METHOD, AND VEHICLE**

(30) Priority: 31.03.2021 JP 2021061108; 31.03.2021 JP 2021061109; 31.03.2021 JP 2021061110; 31.03.2021 JP 2021061111; 31.03.2021 JP 2021061112
(71) Applicant: KOITO MANUFACTURING CO., LTD., Minato-ku, Tokyo, 108-8711 (JP)
(72) Inventor: SUZUKI, Kazuhiro, Shizuoka-shi, Shizuoka 424-8764 (JP); KUBOTA, Akinobu, Shizuoka-shi, Shizuoka 424-8764 (JP); YONEMARU, Syota, Shizuoka-shi, Shizuoka 424-8764 (JP); IGUCHI, Natsuki, Shizuoka-shi, Shizuoka 424-8764 (JP); FUSHIMI, Yoshiaki, Shizuoka-shi, Shizuoka 424-8764 (JP); INOUE, Tatsuya, Shizuoka-shi, Shizuoka 424-8764 (JP); SATO, Masaaki, Shizuoka-shi, Shizuoka 424-8764 (JP); HAYAMI, Toshihisa, Shizuoka-shi, Shizuoka 424-8764 (JP)
(74) Representative: Cabinet Beau de Loménie
(86) International application number: PCT/JP2022/009802
(87) International publication number: WO 2022/209614

(57) **Abstract**

A cleaner system, according to the present invention, is mounted in a vehicle having an external sensor that acquires information about the exterior of the vehicle. The cleaner system is provided with: a cleaning device that ejects a cleaning medium onto the external sensor to clean the external sensor or inhibit dirt from adhering to the external sensor; and a cleaner control unit that operates the cleaning device at a prescribed cleaning strength when a prescribed operation condition is fulfilled. The cleaner control unit also acquires the travel state of the vehicle and controls the cleaning strength on the basis of the travel state.

## Description

### TECHNICAL FIELD

The present disclosure relates to a cleaner system, a program, a cleaner control method, a vehicle, and a mounting body.

### BACKGROUND ART

In an autonomous driving technique, roles of external sensors such as a camera, a light detection and ranging or laser imaging detection and ranging (LiDAR), or the like are important. In order to keep these external sensors clean, a system has been proposed in which cleaning liquid, air, or the like is blown to remove dirt adhering to the external sensors. In order to keep these external sensors clean, various cleaners have been proposed. Further, various cleaners have been proposed in order to keep these external sensors clean.

For example, Patent Literature 1 discloses a vehicle cleaning system including a plurality of optical sensors mounted on a vehicle, a plurality of cleaning units that clean sensor surfaces of the plurality of optical sensors, and a control unit capable of autonomously controlling the cleaning units, in which when there is a cleaning request for the cleaning units, a priority order for operating the plurality of cleaning units is controlled in accordance with a travel situation and/or an environmental situation of the vehicle, and the plurality of optical sensors are cleaned based on the priority order.

For example, Patent Literature 2 discloses a system that causes a cleaner device to clean an external sensor or diagnose whether to clean an external sensor when a driving mode of a vehicle is switched from a manual driving mode to an autonomous driving mode.

For example, Patent Literature 3 discloses a cleaner system including an external sensor that acquires information outside a vehicle, a cleaner unit including a cleaner that discharges cleaning liquid to clean the external sensor, a tank that stores the cleaning liquid, and a cleaner control unit that controls the cleaner unit, in which, when a remaining amount of the cleaning liquid in the tank is larger than a predetermined amount, the cleaner is operated in a first mode, and when the remaining amount of the cleaning liquid in the tank is equal to or smaller than the predetermined amount, the cleaner is operated in a second mode in which a discharge amount of the cleaning liquid is smaller than that in the first mode.

In recent years, a camera is generally mounted on a vehicle. An image captured by the camera is displayed on a display device provided in the vehicle, and serves as assistance in driving. In order to fully exhibit functions of the camera, it is preferable that the camera is in a clean state, and thus various proposals have been made for a cleaner that removes dirt adhering to the camera.

For example, Patent Literature 4 discloses a cleaner system including a sensor cleaner that cleans a sensor such as a camera or the like, and a cleaner switch that operates the sensor cleaner, in which the sensor cleaner is operated when a user operates the cleaner switch.

### CITATION LIST

### PATENT LITERATURE

Patent Literature 1: JP2019-104365A
Patent Literature 2: WO2019/172377
Patent Literature 3: WO2019/181766
Patent Literature 4: WO2018/230558

### SUMMARY OF INVENTION

### TECHNICAL PROBLEM

In Patent Literature 1, an operation order of the plurality of cleaning units is studied, but when the cleaning units are operated, appropriately controlling a degree of cleaning is not studied based on a predetermined condition.

In addition, it is important to remove the adhered dirt from the external sensor, but it is also important to prevent adhesion of the dirt. However, Patent Literature 2 does not disclose a method of preventing adhesion of dirt.

As a method of preventing adhesion of dirt to the external sensor, it is conceivable to continuously blow wind to the external sensor and form a barrier by the wind. However, if the cleaner device is continuously operated at a high output for this purpose, power consumption increases.

In the cleaner system described in Patent Literature 3, an amount of cleaning liquid used is reduced when the amount of cleaning liquid in the tank is small, so that the cleaner can be continuously operated even when the amount of cleaning liquid in the tank is small.

In a situation where the user is considered to require an image from a camera mounted on the vehicle, if the camera can be cleaned to be in a clean state without the user performing an operation for cleaning the camera, usability is considered to be improved.

Accordingly, an object of the present disclosure is to appropriately control a degree of cleaning when a cleaning device is operated with respect to an external sensor.

Another object of the present disclosure is to reduce power consumption of the cleaner device by appropriately operating the cleaner device while preventing adhesion of dirt to the external sensor.

In addition, an object of the present disclosure is, when cleaning liquid in a tank of a cleaner is small, to extend a period in which cleaning using the cleaning liquid by a cleaner can be performed by a method which has not been used in the related art.

Another object of the present disclosure is to improve usability in a cleaner system that cleans a camera mounted on a vehicle.

### SOLUTION TO PROBLEM

In order to achieve at least one of the above objects, a cleaner system according to an aspect of the present disclosure is a cleaner system mounted on a vehicle including an external sensor configured to acquire information outside a vehicle, the cleaner system includes:
a cleaning device configured to clean the external sensor or prevent adhesion of dirt to the external sensor by discharging a cleaning medium to the external sensor; and
a cleaner control unit configured to operate the cleaning device at a predetermined cleaning strength when a predetermined operation condition is satisfied, in which
the cleaner control unit further acquires a travel situation of the vehicle and controls the cleaning strength based on the travel situation.

A program according to an aspect of the present disclosure is a program executed by a computer mounted on a vehicle including an external sensor configured to acquire information outside the vehicle, in which
the vehicle includes a cleaning device configured to clean the external sensor or prevent adhesion of dirt to the external sensor by discharging a cleaning medium to the external sensor, and
the program causes a cleaner control unit of the computer to execute:
   a step of operating the cleaning device at a predetermined cleaning strength when a predetermined operation condition is satisfied;
   a step of acquiring a travel situation of the vehicle; and
   a step of controlling the cleaning strength based on the travel situation.

A cleaner control method according to an aspect of the present disclosure is a cleaner control method executed by a computer mounted on a vehicle including an external sensor configured to acquire information outside the vehicle, in which
the vehicle includes a cleaning device configured to clean the external sensor or prevent adhesion of dirt to the external sensor by discharging a cleaning medium to the external sensor,
the cleaner control method includes:
by a cleaner control unit of the computer,
a step of operating the cleaning device at a predetermined cleaning strength when a predetermined operation condition is satisfied;
a step of acquiring a travel situation of the vehicle; and
a step of controlling the cleaning strength based on the travel situation.

A vehicle according to an aspect of the present disclosure is a vehicle including:
an external sensor configured to acquire information outside the vehicle;
a cleaning device configured to clean the external sensor or prevent adhesion of dirt to the external sensor by discharging a cleaning medium to the external sensor; and
a cleaner control unit configured to operate the cleaning device at a predetermined cleaning strength when a predetermined operation condition is satisfied, in which
the cleaner control unit further acquires a travel situation of the vehicle and controls the cleaning strength based on the travel situation.

In order to achieve at least one of the above objects, a cleaner system according to an aspect of the present disclosure is a cleaner system mounted on a vehicle, in which
the vehicle includes a vehicle control unit configured to selectively execute, as a driving mode, an autonomous driving mode in which control is performed such that the vehicle performs at least one of an acceleration operation, a deceleration operation, and a steering operation based on an output of at least one external sensor configured to acquire information outside the vehicle and a manual driving mode in which a driver drives and operates the vehicle, the cleaner system includes:
at least one air curtain device configured to continuously blow air to the external sensor at a predetermined air blowing strength and prevent adhesion of dirt to the external sensor; and
a cleaner control unit configured to control the air curtain device to operate when a predetermined operation condition is satisfied, and
the cleaner control unit further controls the air blowing strength based on the driving mode.

A program according to an aspect of the present disclosure is a program executed by a computer mounted on a vehicle, in which
the vehicle includes a vehicle control unit configured to selectively execute, as a driving mode, an autonomous driving mode in which control is performed such that the vehicle performs at least one of an acceleration operation, a deceleration operation, and a steering operation based on an output of at least one external sensor configured to acquire information outside the vehicle and a manual driving mode in which a driver drives and operates the vehicle,
the vehicle includes at least one air curtain device configured to continuously blow air to the external sensor at a predetermined air blowing strength and prevent adhesion of dirt to the external sensor, and
the program causes a cleaner control unit of the computer to execute:
a step of controlling the air curtain device to operate when a predetermined operation condition is satisfied; and
a step of controlling the air blowing strength based on the driving mode.

A cleaner control method according to an aspect of the present disclosure is a cleaner control method executed by a computer mounted on a vehicle, in which
the vehicle includes a vehicle control unit configured to selectively execute, as a driving mode, an autonomous driving mode in which control is performed such that the vehicle performs at least one of an acceleration operation, a deceleration operation, and a steering operation based on an output of at least one external sensor configured to acquire information outside the vehicle and a manual driving mode in which a driver drives and operates the vehicle,
the vehicle includes at least one air curtain device configured to continuously blow air to the external sensor at a predetermined air blowing strength and prevent adhesion of dirt to the external sensor, and
the cleaner control method includes:
   by a cleaner control unit of the computer,
   a step of controlling the air curtain device to operate when a predetermined operation condition is satisfied; and
   a step of controlling the air blowing strength based on the driving mode.

A vehicle according to an aspect of the present disclosure is a vehicle including:
a vehicle control unit configured to selectively execute, as a driving mode, an autonomous driving mode in which control is performed such that the vehicle performs at least one of an acceleration operation, a deceleration operation, and a steering operation based on an output of at least one external sensor configured to acquire information outside the vehicle and a manual driving mode in which a driver drives and operates the vehicle;
at least one air curtain device configured to continuously blow air to the external sensor at a predetermined air blowing strength and prevent adhesion of dirt to the external sensor; and
a cleaner control unit configured to control the air curtain device to operate when a predetermined operation condition is satisfied, in which
the cleaner control unit further controls the air blowing strength based on the driving mode.

In order to achieve at least one of the above objects, a cleaner system according to an aspect of the present disclosure is a cleaner system mounted on a mounting body including an external sensor configured to acquire information outside the mounting body, the cleaner system includes:
a cleaning device configured to clean the external sensor by discharging cleaning liquid when a predetermined cleaning condition is satisfied;
an air curtain device configured to continuously blow air to the external sensor at a predetermined air blowing strength to prevent adhesion of dirt to the external sensor when a predetermined air blowing condition is satisfied; and
a cleaner control unit configured to control operations of the cleaning device and the air curtain device, and
the cleaner control unit is configured to
   set the air blowing strength to a first strength when the air blowing condition is satisfied and a remaining amount of the cleaning liquid is equal to or greater than a first threshold, and
   set the air blowing strength to a second strength higher than the first strength when the air blowing condition is satisfied and the remaining amount of the cleaning liquid is less than the first threshold.

A cleaner system according to an aspect of the present disclosure is a cleaner system mounted on a mounting body including an external sensor configured to acquire information outside the mounting body, the cleaner system includes:
a cleaning device configured to clean the external sensor by discharging cleaning liquid when a predetermined cleaning condition is satisfied;
an air curtain device configured to continuously blow air to the external sensor at a predetermined air blowing strength to prevent adhesion of dirt to the external sensor when a predetermined air blowing condition is satisfied; and
a cleaner control unit configured to control operations of the cleaning device and the air curtain device, and
the cleaner control unit performs control such that the air blowing strength increases as a remaining amount of the cleaning liquid decreases.

A program according to an aspect of the present disclosure is a program executed by a computer mounted on a mounting body including an external sensor configured to acquire information outside the mounting body, in which
the mounting body includes
   a cleaning device configured to clean the external sensor by discharging cleaning liquid, and
   an air curtain device configured to continuously blow air to the external sensor at a predetermined air blowing strength to prevent adhesion of dirt to the external sensor,
the program causes a cleaner control unit of the computer to execute:
   a first step of controlling the cleaning device to operate when a predetermined cleaning condition is satisfied; and
   a second step of controlling the air curtain device to operate when a predetermined air blowing condition is satisfied, and
   the second step includes setting the air blowing strength to a first strength when a remaining amount of the cleaning liquid is equal to or greater than a first threshold, and setting the air blowing strength to a second strength higher than the first strength when the remaining amount of the cleaning liquid is less than the first threshold.

A program according to an aspect of the present disclosure is a program executed by a computer mounted on a mounting body including an external sensor configured to acquire information outside the mounting body, in which
the mounting body includes
   a cleaning device configured to clean the external sensor by discharging cleaning liquid, and
   an air curtain device configured to continuously blow air to the external sensor at a predetermined air blowing strength to prevent adhesion of dirt to the external sensor,
the program causes a cleaner control unit of the computer to execute:
a first step of controlling the cleaning device to operate when a predetermined cleaning condition is satisfied; and
a second step of controlling the air curtain device to operate when a predetermined air blowing condition is satisfied, and
the second step includes performing control such that the air blowing strength increases as a remaining amount of the cleaning liquid decreases.

A cleaner control method according to an aspect of the present disclosure is a cleaner control method executed by a computer mounted on a mounting body, in which
the mounting body includes
   an external sensor configured to acquire information outside the mounting body,
   a cleaning device configured to clean the external sensor by discharging cleaning liquid, and
   an air curtain device configured to continuously blow air to the external sensor at a predetermined air blowing strength to prevent adhesion of dirt to the external sensor, the cleaner control method includes:
by a cleaner control unit of the computer,
a first step of controlling the cleaning device to operate when a predetermined cleaning condition is satisfied; and
a second step of controlling the air curtain device to operate when a predetermined air blowing condition is satisfied, and
the second step includes setting the air blowing strength to a first strength when a remaining amount of the cleaning liquid is equal to or greater than a first threshold, and setting the air blowing strength to a second strength higher than the first strength when the remaining amount of the cleaning liquid is less than the first threshold.

A cleaner control method according to an aspect of the present disclosure is a cleaner control method executed by a computer mounted on a mounting body, in which
the mounting body includes
   an external sensor configured to acquire information outside the mounting body,
   a cleaning device configured to clean the external sensor by discharging cleaning liquid, and
   an air curtain device configured to continuously blow air to the external sensor at a predetermined air blowing strength to prevent adhesion of dirt to the external sensor, the cleaner control method includes:
by a cleaner control unit of the computer,
a first step of controlling the cleaning device to operate when a predetermined cleaning condition is satisfied; and
a second step of controlling the air curtain device to operate when a predetermined air blowing condition is satisfied, and
the second step includes performing control such that the air blowing strength increases as a remaining amount of the cleaning liquid decreases.

A mounting body according to an aspect of the present disclosure is a mounting body including:
an external sensor configured to acquire information outside the mounting body;
a cleaning device configured to clean the external sensor by discharging cleaning liquid when a predetermined cleaning condition is satisfied;
an air curtain device configured to continuously blow air to the external sensor at a predetermined air blowing strength to prevent adhesion of dirt to the external sensor when a predetermined air blowing condition is satisfied; and
a cleaner control unit configured to control operations of the cleaning device and the air curtain device, in which
the cleaner control unit is configured to
   set the air blowing strength to a first strength when the air blowing condition is satisfied and a remaining amount of the cleaning liquid is equal to or greater than a first threshold, and
   set the air blowing strength to a second strength higher than the first strength when the air blowing condition is satisfied and the remaining amount of the cleaning liquid is less than the first threshold.

A mounting body according to an aspect of the present disclosure is a mounting body including:
an external sensor configured to acquire information outside the mounting body;
a cleaning device configured to clean the external sensor by discharging cleaning liquid when a predetermined cleaning condition is satisfied;
an air curtain device configured to continuously blow air to the external sensor at a predetermined air blowing strength to prevent adhesion of dirt to the external sensor when a predetermined air blowing condition is satisfied; and
a cleaner control unit configured to control operations of the cleaning device and the air curtain device, in which
the cleaner control unit performs control such that the air blowing strength increases as a remaining amount of the cleaning liquid decreases.

In order to achieve at least one of the above objects, a cleaner system according to an aspect of the present disclosure is a cleaner system mounted on a mounting body including an external sensor configured to acquire information outside a mounting body, the cleaner system includes:
a cleaning device configured to clean the external sensor or prevent adhesion of dirt to the external sensor by discharging a cleaning medium to the external sensor; and
a cleaner control unit configured to operate the cleaning device at a predetermined cleaning strength when a predetermined operation condition is satisfied, and
the cleaner control unit further acquires environmental information around the mounting body, and controls the cleaning strength based on the environmental information.

A program according to an aspect of the present disclosure is a program executed by a computer mounted on a mounting body including an external sensor configured to acquire information outside the mounting body, in which
the mounting body includes a cleaning device configured to clean the external sensor or prevent adhesion of dirt to the external sensor by discharging a cleaning medium to the external sensor, and
the program causes a cleaner control unit of the computer to execute:
   a step of operating the cleaning device at a predetermined cleaning strength when a predetermined operation condition is satisfied;
   a step of acquiring environmental information around the mounting body; and
   a step of controlling the cleaning strength based on the environmental information.

A cleaner control method according to an aspect of the present disclosure is a cleaner control method executed by a computer mounted on a mounting body including an external sensor configured to acquire information outside the mounting body, in which
the mounting body includes a cleaning device configured to clean the external sensor or prevent adhesion of dirt to the external sensor by discharging a cleaning medium to the external sensor, and
the cleaner control method includes:
by a cleaner control unit of the computer,
a step of operating the cleaning device at a predetermined cleaning strength when a predetermined operation condition is satisfied;
a step of acquiring environmental information around the mounting body; and
a step of controlling the cleaning strength based on the environmental information.

A mounting body according to an aspect of the present disclosure is a mounting body including:
an external sensor configured to acquire information outside a mounting body;
a cleaning device configured to clean the external sensor or prevent adhesion of dirt to the external sensor by discharging a cleaning medium to the external sensor; and
a cleaner control unit configured to operate the cleaning device at a predetermined cleaning strength when a predetermined operation condition is satisfied, in which
the cleaner control unit further acquires environmental information around the mounting body and controls the cleaning strength based on the environmental information.

In order to achieve at least one of the above objects, a cleaner system according to an aspect of the present disclosure is a cleaner system mounted on a vehicle, in which
the vehicle includes a plurality of cameras configured to capture an image of an outside of a vehicle and a display device configured to display images captured by the plurality of cameras,
the cleaner system includes:
   a cleaning device configured to clean each of the cameras by discharging a cleaning medium to the camera; and
   a cleaner control unit configured to control an operation of the cleaning device,
   the display device displays an image captured by a camera selected based on a situation of the vehicle or a selection operation by a driver of the vehicle, and
   the cleaner control unit controls the cleaning device to clean the selected camera.

A program according to an aspect of the present disclosure is a program executed by a computer mounted on a vehicle, in which
the vehicle includes a plurality of cameras configured to capture an image of an outside of a vehicle and a display device configured to display images captured by the plurality of cameras,
the vehicle includes a cleaning device configured to clean each of the cameras by discharging a cleaning medium to the camera,
the display device displays an image captured by a camera selected based on a situation of the vehicle or a selection operation by a driver of the vehicle, and
the program causes a cleaner control unit of the computer to execute a step of controlling the cleaning device to clean the selected camera.

A cleaner control method according to an aspect of the present disclosure is a cleaner control method executed by a computer mounted on a vehicle, in which
the vehicle includes a plurality of cameras configured to capture an image of an outside of a vehicle and a display device configured to display images captured by the plurality of cameras,
the vehicle includes a cleaning device configured to clean each of the cameras by discharging a cleaning medium to the camera,
the display device displays an image captured by a camera selected based on a situation of the vehicle or a selection operation by a driver of the vehicle, and
the cleaner control method includes:
a step of controlling the cleaning device to clean the selected camera by a cleaner control unit of the computer.

A vehicle according to an aspect of the present disclosure includes:
a plurality of cameras configured to capture an image of an outside of a vehicle;
a display device configured to display images captured by the plurality of cameras,
a cleaning device configured to clean each of the cameras by discharging a cleaning medium to the camera; and
a cleaner control unit configured to control an operation of the cleaning device, in which
the display device displays an image captured by a camera selected based on a situation of the vehicle or a selection operation by a driver of the vehicle, and
the cleaner control unit controls the cleaning device to clean the selected camera.

### ADVANTAGEOUS EFFECTS OF INVENTION

According to the present disclosure, when a cleaning device is operated with respect to an external sensor, it is possible to appropriately control a degree of cleaning.

Further, according to the present disclosure, it is possible to reduce power consumption of a cleaner device by appropriately operating the cleaner device while preventing adhesion of dirt to the external sensor.

Further, according to the present disclosure, when cleaning liquid in a tank of a cleaner is small, it is possible to extend a period in which cleaning using the cleaning liquid by the cleaner can be performed by a method which has not been used in the related art.

According to the present disclosure, usability can be improved in a cleaner system that cleans a camera mounted on a vehicle.

### BRIEF DESCRIPTION OF DRAWINGS

[FIG. 1] FIG. 1 is a top view of a vehicle on which a cleaner system according to an embodiment of the present disclosure is mounted.
[FIG. 2] FIG. 2 is a block diagram of a vehicle system according to an embodiment of the present disclosure.
[FIG. 3] FIG. 3 is a block diagram of a cleaner system according to an embodiment of the present disclosure.
[FIG. 4] FIG. 4 is a flowchart showing an operation example of a cleaner system according to a first embodiment of the present disclosure.
[FIG. 5] FIG. 5 is a flowchart showing an example of an operation condition determination process shown in FIG. 4.
[FIG. 6] FIG. 6 is a flowchart showing an example of a control process based on a travel situation shown in FIG. 4.
[FIG. 7] FIG. 7 is a schematic diagram showing an example of monitoring regions of a camera and a millimeter-wave radar.
[FIG. 8] FIG. 8 is a flowchart showing an operation example of a cleaner system according to a second embodiment of the present disclosure.
[FIG. 9] FIG. 9 is a block diagram of a cleaner system according to a third embodiment of the present disclosure.
[FIG. 10] FIG. 10 is a flowchart showing an operation example of the cleaner system shown in FIG. 9.
[FIG. 11] FIG. 11 is a flowchart showing another example of the operation example shown in FIG. 10.
[FIG. 12] FIG. 12 is a flowchart showing an operation example of a cleaner system according to a fourth embodiment of the present disclosure.
[FIG. 13] FIG. 13 is a flowchart showing an example of a control process based on environmental information shown in FIG. 12.
[FIG. 14] FIG. 14 is a flowchart showing an operation example of a cleaner system according to a fifth embodiment of the present disclosure.
[FIG. 15] FIG. 15 is a schematic diagram showing an example of a display screen of a display device in FIG. 14.

### DESCRIPTION OF EMBODIMENTS

Hereinafter, embodiments of the present disclosure will be described with reference to the drawings. The same or equivalent components or members shown in the respective drawings are denoted by the same reference numerals, and redundant description thereof will be omitted as appropriate. The embodiments are illustrative rather than limiting the invention, and not all features and combinations thereof described in the embodiments are necessarily essential to the invention.

In the drawings used in the following description, the scale is appropriately changed such that each member has a recognizable size. Further, "L" (left), "R" (right), "F" (front), "B" (back), "U" (up), and "D" (down) directions shown in the drawings are relative directions set for convenience of description. In the present specification, a "front-rear direction" is a direction including an "F direction" and a "B direction". A "left-right direction" is a direction including an "L direction" and an "R direction". The "up-down direction" is a direction including a "U direction" and a "D direction".

### Configuration of Cleaner System

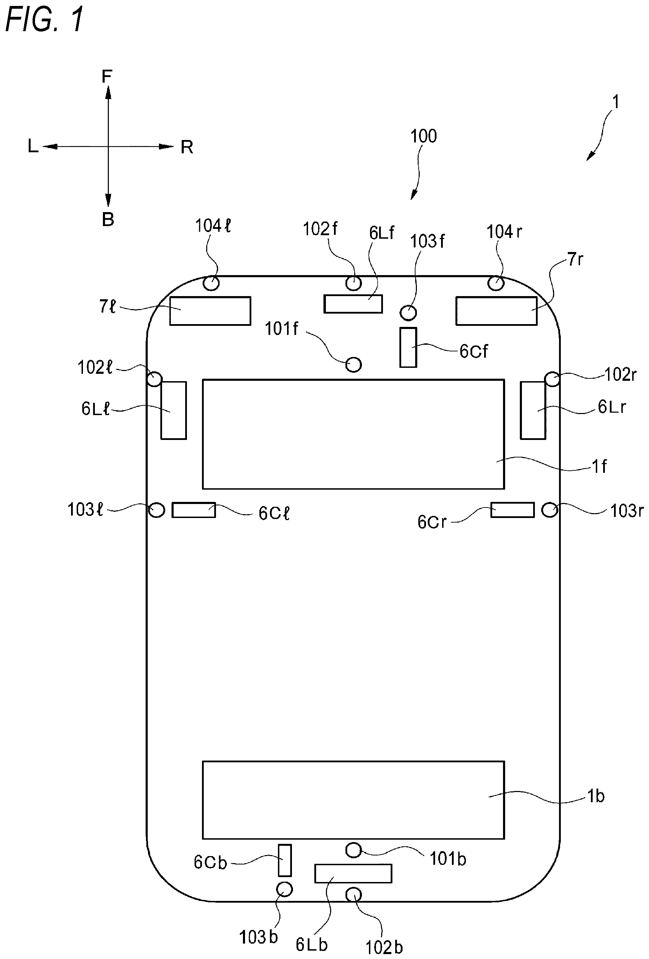

FIG. 1 is a top view of a vehicle 1 on which a cleaner system 100 according to an embodiment of the present disclosure is mounted. The vehicle 1 includes the cleaner system 100. In the present embodiment, the vehicle 1 is an automobile capable of selectively executing an autonomous driving mode and a manual driving mode.

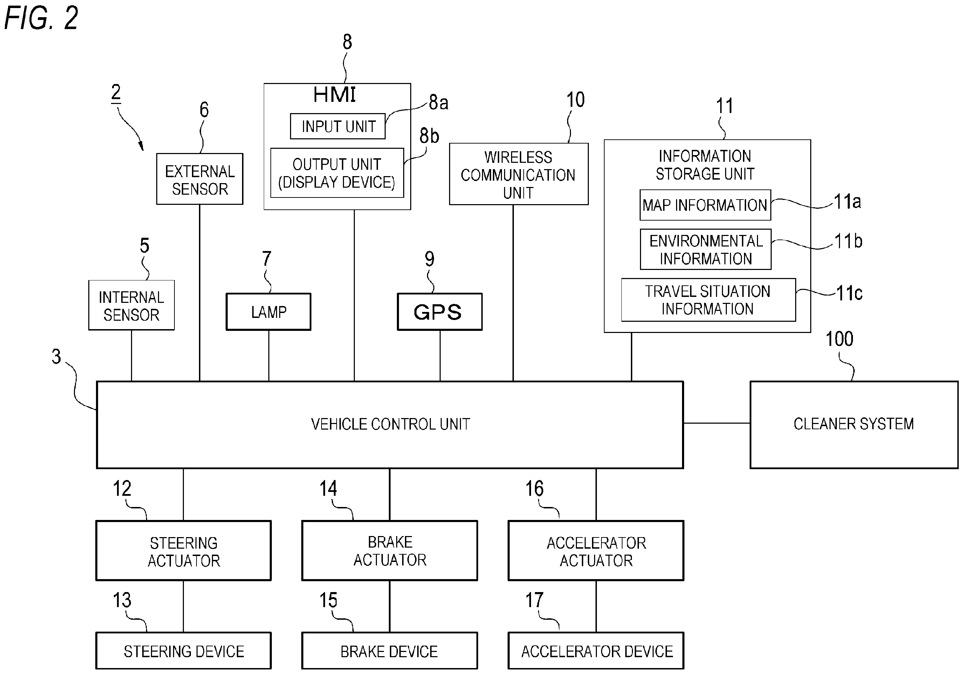

First, a vehicle system 2 of the vehicle 1 will be described with reference to FIG. 2. FIG. 2 is a block diagram of the vehicle system 2. As shown in FIG. 2, the vehicle system 2 includes a vehicle control unit 3, an internal sensor 5, an external sensor 6, a lamp 7, a human machine interface (HMI) 8, a global positioning system (GPS) 9, a wireless communication unit 10, and an information storage unit 11. The vehicle system 2 further includes a steering actuator 12, a steering device 13, a brake actuator 14, a brake device 15, an accelerator actuator 16, and an accelerator device 17.

The vehicle control unit 3 includes an electronic control unit (ECU). The vehicle control unit 3 includes at least one processor such as a central processing unit (CPU), at least one read only memory (ROM) in which various vehicle control programs are stored, and at least one random access memory (RAM) in which various vehicle control data are temporarily stored. The processor loads, on the RAM, a program designated from various vehicle control programs stored in the ROM and executes various processes in cooperation with the RAM. The vehicle control unit 3 controls traveling of the vehicle 1.

The internal sensor 5 is a sensor capable of acquiring information about a subject vehicle. The internal sensor 5 is, for example, at least one of an acceleration sensor, a speed (vehicle speed) sensor, a wheel speed sensor, and a gyro sensor. The internal sensor 5 acquires information about the subject vehicle including a travel state of the vehicle 1 and outputs the information to the vehicle control unit 3. The internal sensor 5 may include a seating sensor that detects whether a driver is sitting in a driver's seat, a face direction sensor that detects a direction of a face of the driver, a human-presence sensor that detects whether a person is present in the vehicle, and the like.

The external sensor 6 is a sensor capable of acquiring information outside the subject vehicle. The external sensor 6 is, for example, preferably at least one of a camera, a radar, and a LiDAR, and is preferably at least one of a camera and a LiDAR. The external sensor 6 acquires information outside the subject vehicle including a surrounding environment of the vehicle 1 (other vehicles, pedestrians, road shapes, traffic signs, obstacles, and the like), and outputs the information to the vehicle control unit 3. The external sensor 6 may include a weather sensor that detects a weather condition, an illuminance sensor that detects illuminance of the surrounding environment of the vehicle 1, and the like.

The camera is, for example, a camera including an imaging element such as a charge-coupled device (CCD) or a complementary metal oxide semiconductor (CMOS). The camera is a camera that detects visible light or an infrared camera that detects infrared light.

The radar is a millimeter-wave radar, a microwave radar, a laser radar, or the like.

The LiDAR is a sensor that generally emits invisible light in front of the LiDAR and acquires information such as a distance to an object, a shape of the object, a material of the object, and a color of the object based on the emitted light and return light.

The lamp 7 is at least one of a headlamp or a position lamp provided in a front portion of the vehicle 1, a rear combination lamp provided in a rear portion of the vehicle 1, a turn signal lamp provided in the front portion or a side portion of the vehicle, and various lamps for notifying a pedestrian or a driver of another vehicle of a situation of the subject vehicle, and the like.

The HMI 8 includes an input unit 8a that receives an input operation from the driver and an output unit 8b that outputs travel information and the like to the driver. The input unit 8a includes a steering wheel, an accelerator pedal, a brake pedal, a driving mode changeover switch for changing a driving mode of the vehicle 1, various buttons for selecting an output content to the output unit 8b, and the like. The output unit 8b includes a display device that displays various travel information and the like. An image captured by a camera as the external sensor 6 may be displayed on the display device. The display device may be a touch panel.

The GPS 9 acquires current position information about the vehicle 1 and outputs the acquired current position information to the vehicle control unit 3. The wireless communication unit 10 receives travel information about another vehicle around the vehicle 1 from the other vehicle and transmits travel information about the vehicle 1 to the other vehicle (vehicle-to-vehicle communication). The wireless communication unit 10 receives infrastructure information from infrastructure equipment such as a traffic light and a sign lamp, and transmits the travel information about the vehicle 1 to the infrastructure equipment (road-to-vehicle communication).

The information storage unit 11 stores map information 11a, environmental information 11b, and travel situation information 11c. The information storage unit 11 may be an external storage device such as a hard disk drive, an internal storage device built in the vehicle 1, or may include both the external storage device and the internal storage device. The environmental information 11b and the travel situation information 11c may be acquired from, for example, the internal sensor 5, the external sensor 6, the GPS 9, the wireless communication unit 10, and the like.

The map information 11a is information related to a map, and is output to the vehicle control unit 3 as necessary. The environmental information 11b is information related to an environment around the vehicle 1, and is output from the vehicle control unit 3 to a cleaner control unit to be described later as necessary. The environmental information 11b includes, for example, at least one of weather information related to weather, temperature information related to temperature, humidity information related to humidity, time information related to daytime and night, frost information related to presence or absence of frost or condensation, adhesive material information that enables determination of whether water drops or dirt adhere to the external sensor 6, road surface information capable of determining a road surface situation of a road on which the vehicle 1 is traveling. The travel situation information 11c is information related to the travel situation of the vehicle 1, and is output from the vehicle control unit 3 to a cleaner control unit to be described later as necessary. The travel situation information 11c includes, for example, at least one of speed information related to a travel speed of the vehicle 1, inter-vehicle distance information related to an inter-vehicle distance between the vehicle 1 and a surrounding vehicle, traffic congestion information related to a traffic congestion situation of a road on which the vehicle 1 is traveling, curve information related to a curve situation of the road on which the vehicle is traveling, travel place information related to a place where the vehicle 1 is traveling, gear information related to a situation of a gear of the vehicle 1, and lane change information related to whether the vehicle 1 changes a lane. The travel place information may include, for example, whether the place is a junction, or a place where the number of insects is estimated to be a predetermined number or more.

When the vehicle 1 travels in the autonomous driving mode, the vehicle control unit 3 autonomously generates at least one of a steering control signal, an accelerator control signal, and a brake control signal based on the travel situation information 11c, the environmental information 11b, the current position information, the map information 11a, and the like. The steering actuator 12 receives the steering control signal from the vehicle control unit 3 and controls the steering device 13 based on the received steering control signal. The brake actuator 14 receives the brake control signal from the vehicle control unit 3 and controls the brake device 15 based on the received brake control signal. The accelerator actuator 16 receives the accelerator control signal from the vehicle control unit 3 and controls the accelerator device 17 based on the received accelerator control signal. As described above, in the autonomous driving mode, the traveling of the vehicle 1 is autonomously controlled by the vehicle system 2.

On the other hand, when the vehicle 1 travels in the manual driving mode, the vehicle control unit 3 generates the steering control signal, the accelerator control signal, and the brake control signal according to driving operations preformed by the driver on the accelerator pedal, the brake pedal, and the steering wheel. As described above, in the manual driving mode, the steering control signal, the accelerator control signal, and the brake control signal are generated by the driving operations preformed by the driver, and thus the traveling of the vehicle 1 is controlled by the driver.

Next, a driving mode of the vehicle 1 will be described. The driving mode includes the autonomous driving mode and the manual driving mode. The autonomous driving mode is a mode in which control is performed such that the vehicle 1 performs at least one of an acceleration operation, a deceleration operation, and a steering operation based on outputs of one or more external sensors 6. The autonomous driving mode includes a fully autonomous driving mode, an advanced driver-assistance mode, and a driver-assistance mode. In the fully autonomous driving mode, the vehicle system 2 autonomously performs all travel control including steering control, brake control, and accelerator control, and the driver is not in a state in which the driver can drive the vehicle 1. In the advanced driver-assistance mode, the vehicle system 2 autonomously performs all the travel control including the steering control, the brake control, and the accelerator control, and the driver is in a state in which the driver can drive the vehicle 1 but does not drive the vehicle 1. In the driver-assistance mode, the vehicle system 2 autonomously performs part of travel control of the steering control, the brake control, and the accelerator control, and the driver drives the vehicle 1 under driver-assistance of the vehicle system 2. On the other hand, in the manual driving mode, the vehicle system 2 does not autonomously perform travel control, and the driver drives the vehicle 1 without the driver-assistance of the vehicle system 2.

The driving mode of the vehicle 1 may be switched by the driver operating the driving mode changeover switch. The driving mode of the vehicle 1 may be autonomously switched based on information related to a travel-allowed section where traveling of an autonomous driving vehicle is allowed or a travel-prohibited section where the traveling of the autonomous driving vehicle is prohibited or information related to an external weather condition. In this case, the vehicle control unit 3 switches the driving mode of the vehicle 1 based on these information. Further, the driving mode of the vehicle 1 may be autonomously switched by using the seating sensor, the face direction sensor, or the like. In this case, the vehicle control unit 3 switches the driving mode of the vehicle 1 based on output signals from the seating sensor and the face direction sensor.

Referring back to FIG. 1. The vehicle 1 includes, as the external sensors 6, a front LiDAR 6Lf, a rear LiDAR 6Lb, a right LiDAR 6Lr, a left LiDAR 6Ll, a front camera 6Cf, a rear camera 6Cb, a right camera 6Cr, and a left camera 6Cl. The front LiDAR 6Lf is configured to acquire information in front of the vehicle 1. The rear LiDAR 6Lb is configured to acquire information behind the vehicle 1. The right LiDAR 6Lr is configured to acquire information on a right side of the vehicle 1. The left LiDAR 6Ll is configured to acquire information on a left side of the vehicle 1. The front camera 6Cf is configured to acquire information in front of the vehicle 1. The rear camera 6Cb is configured to acquire information behind the vehicle 1. The right camera 6Cr is configured to acquire information on the right side of the vehicle 1. The left camera 6Cl is configured to acquire information on the left side of the vehicle 1.

In the example shown in FIG. 1, the front LiDAR 6Lf is provided in a front portion of the vehicle 1, the rear LiDAR 6Lb is provided in a rear portion of the vehicle 1, the right LiDAR 6Lr is provided in a right portion of the vehicle 1, and the left LiDAR 6Ll is provided in a left portion of the vehicle 1, but the present disclosure is not limited to this example. For example, the front LiDAR, the rear LiDAR, the right LiDAR, and the left LiDAR may be collectively disposed in a ceiling portion of the vehicle 1.

The vehicle 1 includes a right headlamp 7r and a left headlamp 7l as lamps 7. The right headlamp 7r is provided on a right side of the front portion of the vehicle 1, and the left headlamp 7l is provided on a left side of the front portion of the vehicle 1.

The vehicle 1 includes a front window 1f and a rear window 1b.

The vehicle 1 includes the cleaner system 100 according to the present embodiment. The cleaner system 100 is a system that removes foreign matter such as water drops, mud, or dust adhering to an object or prevent adhesion of the foreign matter to the object.

In the present embodiment, the cleaner system 100 includes a front window cleaner unit (hereinafter, "window cleaner unit" is also referred to as "WC") 101f capable of cleaning the front window 1f and a rear WC101b capable of cleaning the rear window 1b. Hereinafter, the front WC101f and the rear WC101b are also collectively referred to as "WC101".

The cleaner system 100 includes a front LiDAR cleaner unit (hereinafter, a "LiDAR cleaner unit" is also referred to as "LC") 102f capable of cleaning the front LiDAR6Lf, a rear LC102b capable of cleaning the rear LiDAR6Lb, a right LC102r capable of cleaning the right LiDAR6Lr, and a left LC102l capable of cleaning the left LiDAR6Ll. Hereinafter, the front LC102f, the rear LC102b, the right LC102r, and the left LC102l are also collectively referred to as "LC102".

The cleaner system 100 includes a front camera cleaner unit (hereinafter, a "camera cleaner unit" is also referred to as "CC") 103f capable of cleaning the front camera 6Cf, a rear CC103b capable of cleaning the rear camera 6Cb, a right CC103r capable of cleaning the right camera 6Cr, and a left CC103l capable of cleaning the left camera 6Cl. Hereinafter, the front CC103f, the rear CC103b, the right CC103r, and the left CC103l are also collectively referred to as "CC103".

The cleaner system 100 includes a right headlamp cleaner unit (hereinafter, a "headlamp cleaner unit" is also referred to as "HC") 104r capable of cleaning the right headlamp 7r, and a left HC104l capable of cleaning the left headlamp 7l. Hereinafter, the right HC104r and the left HC104l are also collectively referred to as "HC104".

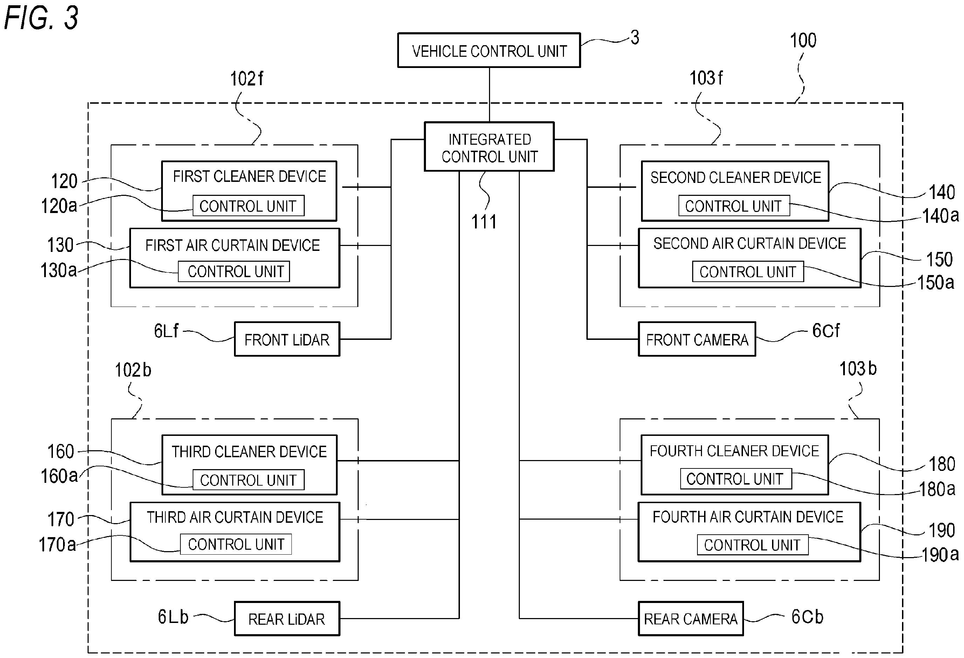

FIG. 3 is a block diagram of the cleaner system 100. The cleaner system 100 includes the WC101, the LC102, the CC103, and the HC104 described above, and an integrated control unit 111 that controls these cleaner units. In FIG. 3, among the cleaners described above, the front LC102f, the front CC103f, the rear LC102b, and the rear CC103b are shown, and other cleaner units are omitted.

The front LC102f includes a first cleaner device 120 and a first air curtain device 130. The front CC103f includes a second cleaner device 140 and a second air curtain device 150. The rear LC102b includes a third cleaner device 160 and a third air curtain device 170. The rear CC103b includes a fourth cleaner device 180 and a fourth air curtain device 190.

Here, the cleaner device is a device that includes one or more nozzles and discharges a cleaning medium such as cleaning liquid or air from the nozzles to an object to be cleaned such as the external sensor 6 or a vehicle lamp to remove foreign matter adhering to the object to be cleaned. The cleaner device may include a liquid nozzle that discharges cleaning liquid and an air nozzle that discharges air. The air curtain device is a device that implements an air curtain function of preventing foreign matter from adhering to an object to be cleaned such as the external sensor 6 or a vehicle lamp by continuously blowing air at a predetermined air blowing strength to the object to be cleaned to allow constant air normally to flow through a surface layer of the object to be cleaned. Any cleaner device or air curtain device having these functions can be used without particular limitations.

The object to be cleaned may be a detection surface of the external sensor 6, a cover covering the detection surface, or the like. The air blowing strength indicates a degree of strength of the blowing air. The air blowing strength can be defined by, for example, an air speed or an air volume of air to be blown to the object to be cleaned. A high air blowing strength may mean that the air speed is high or the air volume is large. A state in which the air blowing strength is the lowest may be a state in which the air blowing is stopped.

Other cleaner units not shown in FIG. 3 also include at least one of the cleaner device and the air curtain device. A configuration of each cleaner unit and structures of the cleaner device and the air curtain device included in each cleaner unit may be appropriately determined according to a type of the object to be cleaned.

The cleaner devices 120, 140, 160, and 180 are provided with control units 120a, 140a, 160a, and 180a, respectively. The air curtain devices 130, 150, 170, and 190 are provided with control units 130a, 150a, 170a, and 190a, respectively. The control units of the cleaner devices and the control units of the air curtain devices are electrically connected to the integrated control unit 111. The control units of the cleaner devices and the control units of the air curtain devices control operations of the cleaner devices 120, 140, 160, and 180 and the air curtain devices 130, 150, 170, and 190 based on signals input from the integrated control unit 111. The integrated control unit 111 is electrically connected to the vehicle control unit 3. In the present specification, the integrated control unit 111, the control unit of each cleaner device, and the control unit of each air curtain device are collectively referred to as a "cleaner control unit".

In the present embodiment, the control unit of each cleaner device, the control unit of each air curtain device, and the integrated control unit 111 are separately provided. Alternatively, these control units may be integrally provided. That is, the cleaner control unit may be configured as a single electronic control unit. The vehicle control unit 3 and the integrated control unit 111 are separately provided. Alternatively, the vehicle control unit 3 and the integrated control unit 111 may be integrally provided. In this respect, the vehicle control unit 3 and the integrated control unit 111 may be configured as a single electronic control unit. That is, the cleaner control unit may be a part of the vehicle control unit 3.

### Cleaner Control Method

Next, a cleaner control method performed by the cleaner system 100 according to the present embodiment will be described. The cleaner control method according to the present embodiment is executed by a computer including the cleaner control unit, and includes causing the cleaner control unit to execute various operations. The cleaner control unit executes various operations by executing a program stored in a computer including the cleaner control unit or an external storage device communicably connected to the computer. Here, the "computer" may be a computer device including the vehicle control unit 3, a computer device including the integrated control unit 111, or a computer device including a control unit of an air curtain device.

### First Embodiment

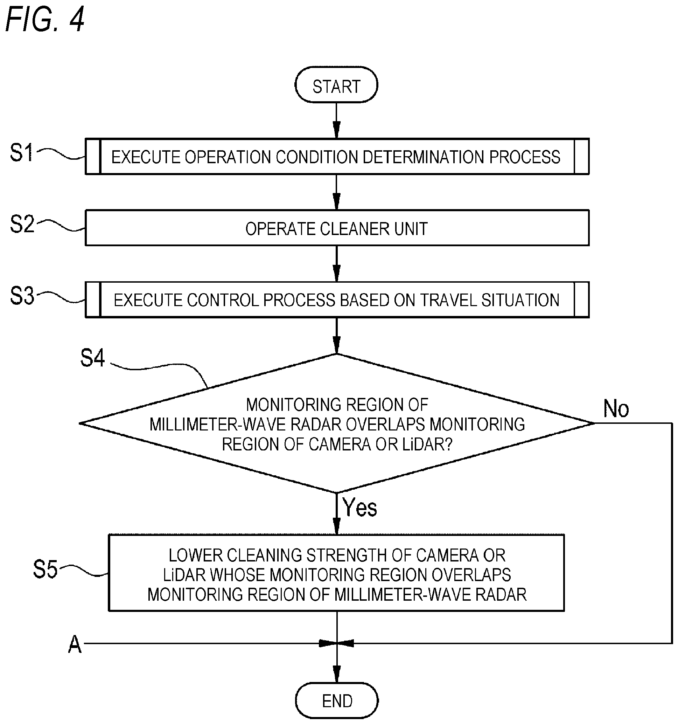

FIG. 4 is a flowchart showing an operation example of the cleaner system 100 according to a first embodiment of the present disclosure. Specifically, FIG. 4 shows an example of operation control of each cleaner unit (cleaning device) by the cleaner control unit. An order of processes constituting flowcharts described in the present specification is not the same as long as no contradiction or inconsistency occurs in a process content.

In the following description, it is assumed that each cleaner unit provided for cleaning the external sensor 6 includes both the cleaner device and the air curtain device, and may include only one of the cleaner device and the air curtain device. When each cleaner unit includes only the cleaner device, the cleaner device preferably includes a liquid nozzle that discharges cleaning liquid and an air nozzle that discharges air.

In the present embodiment, the external sensor 6 is a camera and a LiDAR. That is, unless otherwise specified, the "cleaner unit" described below is the LC102 or the CC103. Since the camera and the LiDAR are more likely to be influenced by an adhesive material such as water drops or dirt than the millimeter-wave radar or the like, it is significant to remove the adhesive material or to prevent adhesion of the adhesive material by the cleaner unit.

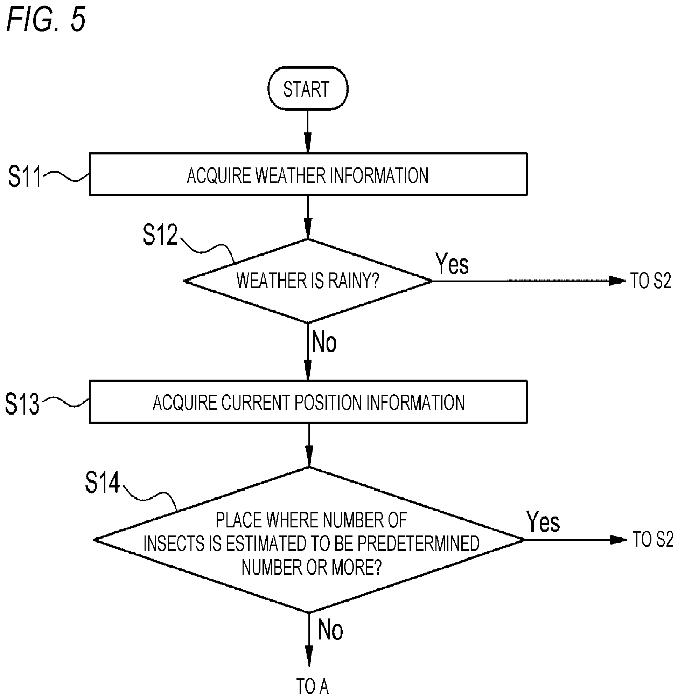

First, in step S1, the cleaner control unit determines whether each cleaner unit satisfies an operation condition. FIG. 5 is a flowchart showing an example of an operation condition determination process in step S1 in FIG. 4.

In step S11, the cleaner control unit acquires weather information from the vehicle control unit 3, for example. When it is determined that the weather is rainy based on the weather information (Yes in step S12), the cleaner control unit determines that operation conditions of the cleaner unit are satisfied, and the process proceeds to step S2 in FIG. 4. On the other hand, when it is determined that the weather is not rainy (No in step S12), the cleaner control unit does not operate the air curtain device. The weather information may be any information that can determine the weather, and may be meteorological information, or may be information related to an output from a rain sensor mounted on the vehicle 1, whether a wiper is driven, an output from a camera, which is the external sensor 6, or the like.

The fact that the weather in step S12 is rainy is one of the operation conditions of the cleaner unit. When the weather is rainy, dirt such as falling raindrops, water drops and mud splashed from the road surface is likely to adhere to the external sensor 6. Therefore, when the weather is rainy, it is preferable to operate the cleaner unit.

In step S13, the cleaner control unit acquires current position information about the vehicle 1 from the vehicle control unit 3, for example. The current position information is, for example, information acquired by a GPS sensor. When the cleaner control unit determines that a current position of the vehicle 1 is a place where the number of insects is estimated to be a predetermined number or more (Yes in step S14), the cleaner control unit determines that the operation conditions of the cleaner unit are satisfied, and the process proceeds to step S2 in FIG. 4. On the other hand, when the cleaner control unit determines that the current position of the vehicle 1 is not the place where the number of insects is estimated to be the predetermined number or more (No in step S 14), the air curtain device is not operated.

The process in step S14 may be performed, for example, by referring to the map information 11a and determining whether the current position is a place where there are many insects. The place where there are many insects is, for example, in a forest area or a vicinity of a river. For example, when the cleaner control unit determines that the current position is in a forest area or the like based on the map information 11a, the cleaner control unit determines that the operation conditions of the cleaner unit are satisfied. The cleaner control unit may acquire travel place information included in the travel situation information 11c instead of the map information 11a and perform the determination in step S14 based on the travel place information.

Whether the current position is a place where there are many insects may be determined based on an image captured by a camera, which is the external sensor 6. In this case, the cleaner control unit may determine whether the current position is in a forest area by analyzing the image captured by the camera.

The fact that the current position is a place where there are many insects is one of the operation conditions of the cleaner unit. If an insect adheres to the camera or the LiDAR, a function of the sensor may deteriorate. Therefore, if the current position of the vehicle 1 is a place where there are many insects, it is preferable to operate the cleaner unit.

As a matter of course, even in the case of No in step S12 and step S14, when other operation conditions are satisfied, the cleaner control unit operates the cleaner unit based on the other operation conditions. The other operation conditions are not particularly limited, and may be, for example, conditions in which an adhesive material such as water drops or dirt is likely to adhere to the external sensor 6. Specific examples of the other operation conditions include that the road surface on which the vehicle 1 is traveling is wet and that the vehicle 1 is in the autonomous driving mode.

Referring back to FIG. 4. In step S2, the cleaner control unit operates the cleaner unit at a predetermined cleaning strength. Here, the cleaning strength indicates the degree of the strength of the cleaning. The cleaning strength can be defined by, for example, a type of the cleaning medium used for cleaning, an operation time of the cleaner unit, an amount of the cleaning medium, and a discharge strength. As an example of magnitude of the cleaning strength depending on the type of the cleaning medium, the cleaning liquid and the air are used in descending order of the cleaning strength. The cleaning strength is higher as the operation time of the cleaner unit is longer. Similarly, it can be said that the cleaning strength is higher as the amount of the cleaning medium or the discharge strength (for example, the air volume or the air speed) is higher.

The cleaning strength (that is, the cleaning medium to be used, the operation time, the amount of the cleaning medium, the discharge strength, and the like) in step S2 can be determined based on the satisfied operation conditions. When it is determined in step S12 that the weather is rainy or when it is determined in step S14 that the current position is a place where there are many insects, for example, the cleaner control unit preferably operates the air curtain device to continuously blow air to the external sensor 6. By operating the air curtain device, a barrier due to air can be formed on a detection surface of the air curtain device, and adhesion of rain, mud, insects, and the like to the external sensor 6 can be prevented.

It is considered that preventing the adhesion of insects is also possible at a lower air volume and a lower air speed than in the case of preventing the adhesion of rain and mud. Therefore, when it is determined that the current position is a place where there are many insects, the cleaning strength may be lower than that when it is determined that the weather is rainy. With this configuration, power consumption by the cleaner unit can be reduced.

The cleaner unit operated in step S2 may be all or a part of the cleaner units corresponding to the respective external sensors 6. The cleaner control unit may determine a cleaner unit to be operated based on the satisfied operation conditions.

Each air curtain device included in the LC102 includes a pump (not shown) for supplying air to the air nozzle of the air curtain device. As another configuration example, each air curtain device included in the LC102 may share a pump. In the case of such a configuration, air can be supplied to all or a part of the LCs 102 determined to be operated by the pump. The same applies to each cleaner device included in the LC102, each cleaner device included in the CC103, and each air curtain device.

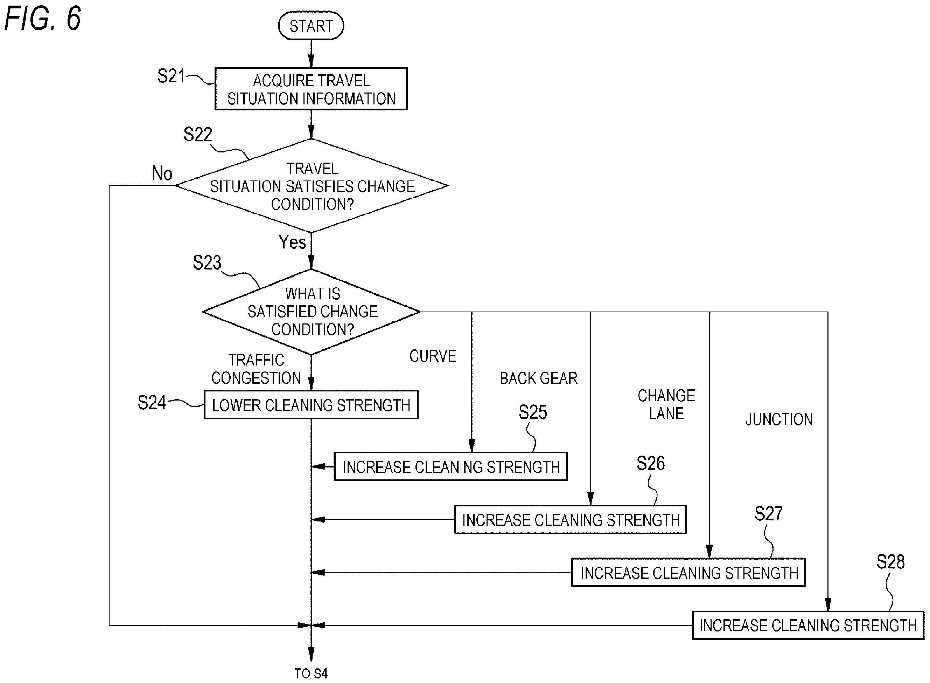

In step S3, the cleaner control unit controls the cleaning strength of the cleaner unit based on the travel situation of the vehicle 1. Here, FIG. 6 is a flowchart showing an example of a control process based on the travel situation in step S3 in FIG. 4.

First, in step S21, the cleaner control unit acquires the travel situation information 11c from the vehicle control unit 3, for example. When the travel situation of the vehicle 1 grasped by the travel situation information 11c acquired in step S21 does not satisfy a change condition for changing the cleaning strength (No in step S22), the process proceeds to step S4 in FIG. 4.

On the other hand, when the travel situation of the vehicle 1 satisfies the change condition for changing the cleaning strength (Yes in step S22), the cleaner control unit controls the cleaning strength based on the satisfied change condition.

One of the change conditions in the present embodiment is that the road on which the vehicle 1 is traveling is congested. When this change condition is satisfied ("traffic congestion" in step S23), in step S24, the cleaner control unit lowers the cleaning strength of the operating cleaner unit. Specifically, the air speed and the air volume of the operating air curtain device are increased.

This is because the air curtain device is easily influenced by the vehicle speed, and it is desirable to increase the air speed or the like when the vehicle speed is high, but when the road is congested, the vehicle 1 travels at a low speed, and an effect of preventing the adhesion of the adhesive material is obtained even when the air speed, the air volume, or the like of the air curtain device is reduced. By performing such control, the power consumption of the air curtain device can be reduced. When the traffic congestion is eliminated, the cleaning strength is increased.

One of the change conditions in the present embodiment is that a road on which the vehicle 1 is traveling is curved under a situation where the weather is rainy or the road surface is wet. When this change condition is satisfied ("curve" in step S23), in step S25, the cleaner control unit increases the cleaning strength of the operating cleaner unit. Specifically, the air speed and the air volume of the operating air curtain device are increased.

When the vehicle 1 turns on a curve during rain or in a situation where the road surface is wet, water, mud, or the like is more likely to adhere to the external sensor 6 than when the vehicle 1 travels linearly. Accordingly, by increasing the air speed or the like of the air curtain device in such a case, adhesion of water, mud, or the like is easily prevented even in such a case.

Whether the road on which the vehicle 1 is traveling is curved may be determined based on, for example, curve information included in the travel situation information 11c. Specifically, the cleaner control unit calculates a curvature of a guard rail or a white line based on an image captured by a camera, which is the external sensor 6, and determines whether the road curve is curved based on the calculated curvature. The curvature of the guard rail or the white line may be calculated by the vehicle control unit 3. Instead of the curve information, the map information 11a may be used to determine whether the road is curved.

One of the change conditions in the present embodiment is that the gear of the vehicle 1 is engaged with a back gear. When this change condition is satisfied ("back gear" in step S23), in step S26, the cleaner control unit increases the cleaning strength of the cleaner unit. In step S26, for example, the air speed or air volume of the air curtain device may be increased, or the cleaner control unit may be switched from continuous blowing air by the air curtain device to cleaning using the cleaning liquid by the cleaner device.

When the vehicle 1 is backed up, a field of view of the driver is more likely to be limited than when the vehicle 1 is moved forward, and the importance of the external sensor 6 is increased. In the present embodiment, when the importance of the external sensor 6 is increased, it can be said that the deterioration of a detection capability of the external sensor 6 is further prevented, and the cleaner unit is controlled more appropriately.

One of the change conditions in the present embodiment is that the vehicle 1 is to change a lane. When this change condition is satisfied ("change a lane" in step S23), in step S27, the cleaner control unit increases the cleaning strength of the cleaner unit. In step S27, for example, the air speed or air volume of the air curtain device may be increased, or the cleaner control unit may be switched from continuous blowing air by the air curtain device to cleaning using the cleaning liquid by the cleaner device.

When the vehicle 1 is to change a lane, the vehicle 1 is more likely to come into contact with another vehicle or the like than when the vehicle 1 is moved forward, and thus the importance of the external sensor 6 is increased. In the present embodiment, when the importance of the external sensor 6 is increased, it can be said that the deterioration of a detection capability of the external sensor 6 is further prevented, and the cleaner unit is controlled more appropriately.

Whether the road on which the vehicle 1 is traveling is curved may be determined based on, for example, lane change information included in the travel situation information 11c. Specifically, the cleaner control unit determines whether the vehicle 1 changes the lane based on information about a lane obtained from an image captured by the front camera 6Cf, a steering control signal, and the like.

One of the change conditions in the present embodiment is that the vehicle 1 is at a junction of roads. When this change condition is satisfied ("junction" in step S23), in step S28, the cleaner control unit increases the cleaning strength of the cleaner unit for a predetermined time. In step S28, for example, the air speed or air volume of the air curtain device may be increased, or the cleaner control unit may be switched from continuous blowing air by the air curtain device to cleaning using the cleaning liquid by the cleaner device.

When the vehicle 1 is at the junction of roads, the vehicle 1 is more likely to come into contact with another vehicle or the like, and thus the importance of the external sensor 6 is increased. In the present embodiment, when the importance of the external sensor 6 is increased, it can be said that the deterioration of a detection capability of the external sensor 6 is further prevented, and the cleaner unit is controlled more appropriately.

Whether the vehicle 1 is at the junction of roads may be determined based on, for example, travel place information included in the travel situation information 11c. Specifically, the cleaner control unit determines whether the vehicle 1 is at the junction based on a pattern of a lane obtained from an image captured by a camera, which is the external sensor 6, current position information, the map information 11a, a position of the ETC, and the like.

After the processes in steps S24 to S28, the process proceeds to step S4 in FIG. 4. A change condition of the cleaning strength is not limited to the change condition described with reference to FIG. 6, and various change conditions based on the travel situation of the vehicle 1 can be set.

Referring back to FIG. 4. In step S4, the cleaner control unit determines whether a monitoring region of the millimeter-wave radar overlaps a monitoring region of a camera or a LiDAR. In response to determining that the monitoring areas overlap (Yes in step S4), in step S5, the cleaner control unit lowers the cleaning strength of the camera or the LiDAR whose monitoring region overlaps the monitoring region of the millimeter-wave radar.

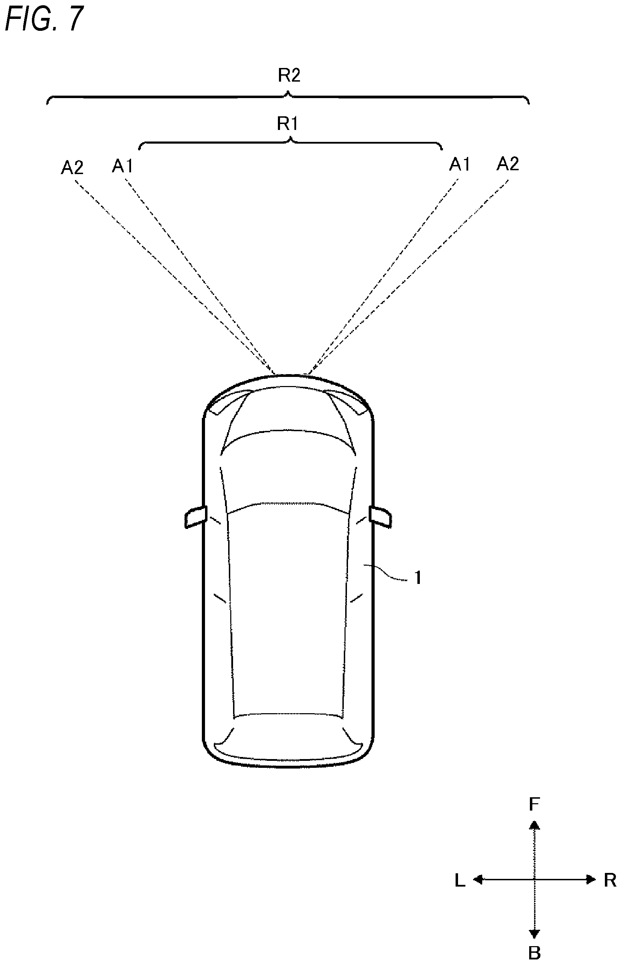

FIG. 7 is a schematic diagram showing an example of monitoring regions of a camera and a millimeter-wave radar. In FIG. 7, a region between a dotted line A1 and a dotted line A1 is a monitoring region R1 of the millimeter-wave radar, and a region between the dotted line A2 and the dotted line A2 is a monitoring region R2 of the camera.

In the state of FIG. 7, the monitoring region R1 and the monitoring region R2 overlap. In such a state, when it can be determined that external information can be sufficiently acquired by the millimeter-wave radar, the importance of acquisition of the external information by the camera is low. In addition, compared to a camera or a LiDAR, since the millimeter-wave radar is less likely to be influenced by adhesion of water drops or the like, the millimeter-wave radar can sufficiently acquire the external information without operating the air curtain device or the like even when the weather is rainy. Thus, in such a case, the cleaning strength for the camera may be lowered, or the operation of the cleaner unit for the camera may be stopped.

### Second Embodiment

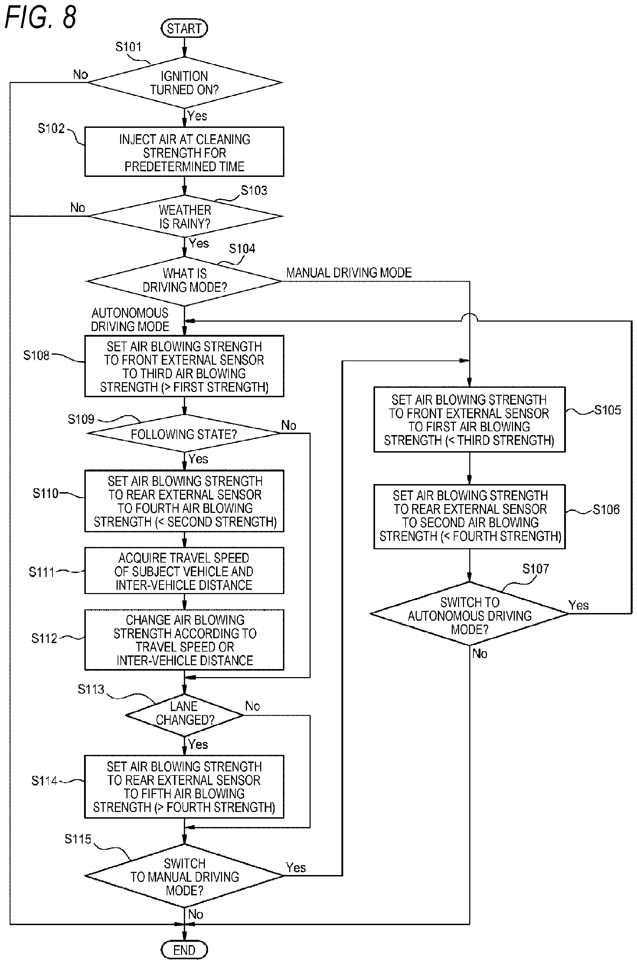

FIG. 8 is a flowchart showing an operation example of the cleaner system 100 according to a second embodiment of the present disclosure. Specifically, FIG. 8 shows an example of operation control of each air curtain device by the cleaner control unit.

In the present operation example, each air curtain device operates to continuously blow air to the external sensor 6 at a predetermined air blowing strength when predetermined operation conditions are satisfied. The operation conditions are not particularly limited, and may be, for example, conditions under which an adhesive material such as water drops or dirt is likely to adhere to the external sensor 6. In the present operation example, the external sensor 6 is a camera and a LiDAR. Since the camera and the LiDAR are more likely to be influenced by an adhesive material such as water drops or dirt than the millimeter-wave radar or the like, it is significant to prevent the adhesion of the adhesive material by the air curtain device.

First, in step S101, when the ignition of the vehicle 1 is turned on (Yes in step S101), the cleaner control unit acquires, for example, information indicating that the ignition is turned on from the vehicle control unit 3. The ignition being turned on is one of the operation conditions. When the ignition is not turned on (No in step S 101), the operation conditions of the air curtain device are not satisfied, and the process ends.

When the ignition is turned on in step S101, in subsequent step S102, the cleaner control unit operates the air curtain device to inject air to the external sensor 6 at an air blowing strength for cleaning for a predetermined time. The injection of air in step S102 is not intended to prevent adhesion of dirt or the like to the external sensor 6, but is intended to remove an adhesive material such as water drops or dirt that may adhere to the external sensor 6. By executing step S102, even when an adhesive material adheres to the external sensor 6 in a period in which the vehicle 1 is not used before an engine is started, the adhesive material can be removed within a possible range.

In step S102, all the air curtain devices provided for the external sensors 6 are preferably operated. Accordingly, all the external sensors 6 can be cleaned within a possible range at the start of operation. On the other hand, a dirt sensor that detects dirt from the external sensor 6 may be provided, and whether to clean each external sensor 6 may be determined based on an output from the dirt sensor, and the air curtain device may be operated only for the external sensor 6 determined to be cleaned. Accordingly, the power consumption of the air curtain device can be reduced.

The air blowing strength for cleaning is not particularly limited, and is preferably higher than an air blowing strength for preventing adhesion of dirt or the like to the external sensor 6, for example. The air blowing strength for cleaning may be, for example, a maximum air speed or a maximum air volume in the air curtain device. The predetermined time is not particularly limited, and is, for example, about 1 to 10 seconds. After the elapse of the predetermined time, the injection of air at the air blowing strength for cleaning is ended.

Step S102 may be executed by a device different from the air curtain device. For example, the cleaner device included in the cleaner unit may include a liquid nozzle for injecting cleaning liquid and an air nozzle for injecting air, and the air may be injected from the cleaner device to the external sensor 6.

The fact that the weather in step S103 is rainy is one of the operation conditions. When the weather is rainy, dirt such as falling raindrops, water drops and mud splashed from the road surface is likely to adhere to the external sensor 6. Therefore, when the weather is rainy, it is preferable to operate the air curtain device.

The cleaner control unit acquires weather information from the vehicle control unit 3, for example. When it is determined that the weather is rainy based on the weather information (Yes in step S103), the cleaner control unit determines that the operation conditions are satisfied, and the process proceeds to step S104. The weather information may be any information that can determine the weather, and may be meteorological information, or may be information related to an output from a rain sensor mounted on the vehicle 1, whether a wiper is driven, an output from a camera, which is the external sensor 6, or the like.

On the other hand, when it is determined that the weather is not rainy (No in step S103), the cleaner control unit does not operate the air curtain device and ends the process. As a matter of course, even in the case of No in step S103, when other operation conditions are satisfied, the cleaner control unit operates the air curtain device based on the other operation conditions. Examples of the other operation conditions include that the road surface on which the vehicle 1 is traveling is wet.

In step S104, the cleaner control unit acquires information related to the driving mode of the vehicle 1 from the vehicle control unit 3. When it is determined in step S104 that the driving mode is the manual driving mode, in step S 105, the cleaner control unit operates the air curtain device at a first air blowing strength with respect to the external sensor 6 in front of the vehicle 1.

The first air blowing strength is an air blowing strength lower than a third air blowing strength in the autonomous driving mode to be described later. In the manual driving mode, the front of the vehicle 1 is usually visually recognized by the driver. Therefore, in the manual driving mode, the importance of the external sensor 6 that acquires the information in front of the vehicle 1 is not as high as that in the autonomous driving mode. In the present embodiment, the power consumption by the air curtain device is reduced by setting the air blowing strength for the external sensor 6, which is considered to be less important in the manual driving mode, to be lower than that in the autonomous driving mode.

As a specific example, in step S105, the first air curtain device 130 continuously blows air to the front LiDAR 6Lf at the first air blowing strength. Similarly, the second air curtain device 150 continuously blows air to the front camera Cf at the first air blowing strength. Here, the first air blowing strength of the first air curtain device 130 may be lower than a third air blowing strength of the first air curtain device 130, and may be the same as or different from the first air blowing strength of the second air curtain device 150. The same applies to the first air blowing strength of the second air curtain device 150. The first air blowing strength may be an air blowing strength at which the air volume and the air speed are zero. That is, in step S105, the air curtain device may not be operated with respect to the external sensor 6 in front of the vehicle 1.

When it is determined in step S104 that the driving mode is the manual driving mode, in step S106, the cleaner control unit operates the air curtain device at the second air blowing strength with respect to the external sensor 6 behind the vehicle 1. The second air blowing strength is higher than a fourth air blowing strength to be described later. When the vehicle is moving forward in the manual driving mode, behind the vehicle 1, there is usually a region less easily visually recognized by the driver. Therefore, in the manual driving mode, the importance of the external sensor 6 that acquires the information behind the vehicle 1 is high. Therefore, in the present embodiment, the air blowing strength for the rear external sensor 6, which is considered to be highly important in the manual driving mode, is set to be higher than a specific situation in the autonomous driving mode to be described later.

As a specific example, in step S106, the third air curtain device 170 continuously blows air to the rear LiDAR 6Lb at the second air blowing strength. Similarly, the fourth air curtain device 190 continuously blows air to a rear camera Cb at the second air blowing strength. The second air blowing strength of the third air curtain device 170 may be higher than a fourth air blowing strength of the third air curtain device 170, and may be the same as or different from the second air blowing strength of the fourth air curtain device 190. The same applies to the second air blowing strength of the fourth air curtain device 190.

Next, in step S107, when the driving mode is switched to the autonomous driving mode (Yes in step S 107), the cleaner control unit acquires, for example, information indicating that the driving mode is switched to the autonomous driving mode from the vehicle control unit 3, and the process proceeds to step S108.

In the case of Yes in step S107 and in a case where it is determined in step S104 that the driving mode is the autonomous driving mode, in step S 108, the cleaner control unit operates the air curtain device at a third air blowing strength with respect to the external sensor 6 in front of the vehicle 1.

The third air blowing strength is an air blowing strength higher than the above-described first air blowing strength. In the autonomous driving mode, the importance of the external sensor 6 that acquires the information in front of the vehicle 1 is higher than that in the manual driving mode. Therefore, in the present embodiment, the air blowing strength for the external sensor 6, which is considered to be highly important in the autonomous driving mode, is set to be higher than that in the manual driving mode.

As a specific example, in step S108, the first air curtain device 130 continuously blows air to the front LiDAR 6Lf at the third air blowing strength. Similarly, the second air curtain device 150 continuously blows air to the front camera Cf at the third air blowing strength. Here, the third air blowing strength of the first air curtain device 130 may be higher than the first air blowing strength of the first air curtain device 130, and may be the same as or different from the third air blowing strength of the second air curtain device 150. The same applies to the third air blowing strength of the second air curtain device 150.

In step S109, when it is determined that the vehicle 1 is in a following state, in step S110, the cleaner control unit operates the air curtain device at a fourth air blowing strength with respect to the external sensor 6 behind the vehicle 1. The following state is one of modes that can be selected in the autonomous driving mode. In the following state, for example, the vehicle control unit 3 generates an accelerator control signal so as to maintain a speed set by the driver or the like, and generates a brake control signal so as to maintain an inter-vehicle distance between the vehicle 1 and another vehicle traveling in front of the vehicle 1 at a predetermined distance or more.

The fourth air blowing strength is an air blowing strength lower than the above-described second air blowing strength. In the following state, the accelerator control signal and the brake control signal are generated mainly based on the set speed and the inter-vehicle distance between the vehicle 1 and the other vehicle traveling in front of the vehicle 1. In the following state, since the inter-vehicle distance between the vehicle 1 and the other vehicle traveling in front of the vehicle 1 is determined based on an output from the external sensor 6 that acquires the information in front of the vehicle 1, the importance of the external sensor 6 behind the vehicle 1 is not so high and is considered to be lower than that in the manual driving mode. In the present embodiment, the power consumption by the air curtain device is reduced by setting the air blowing strength for the external sensor 6 behind the vehicle 1, which is considered to be less important in the following state, to be lower than that in the manual driving mode.

As a specific example, in step S110, the third air curtain device 170 continuously blows air to the rear LiDAR 6Lb at the fourth air blowing strength. Similarly, the fourth air curtain device 190 continuously blows air to the rear camera Cb at the fourth air blowing strength. Here, the fourth air blowing strength of the third air curtain device 170 may be lower than the second air blowing strength of the third air curtain device 170, and may be the same as or different from the fourth air blowing strength of the fourth air curtain device 190. The same applies to the fourth air blowing strength of the fourth air curtain device 190. The fourth air blowing strength may be an air blowing strength at which the air volume and the air speed are zero. That is, in step S110, the air curtain device may not be operated with respect to the external sensor 6 behind the vehicle 1.

When the vehicle 1 is in the following state, in step S111, the cleaner control unit acquires, for example, information related to the travel speed of the vehicle 1 or information related to an inter-vehicle distance between the vehicle 1 and a surrounding vehicle traveling around the vehicle 1 from the vehicle control unit 3. In step S111, both the travel speed and the inter-vehicle distance may be acquired.

Next, in step S112, the cleaner control unit changes the air blowing strength of the air curtain device based on the travel speed or the inter-vehicle distance acquired in step S 111. In step S 112, the air blowing strength may be changed based on both the travel speed and the inter-vehicle distance.

It is considered that the higher the travel speed is, the higher the possibility that the adhesive material adheres to the external sensor 6 is. Therefore, in order to prevent adhesion, in step S112, for example, when the travel speed exceeds a predetermined threshold or the travel speed increases, the air blowing strength is changed to increase. It is considered that the shorter the inter-vehicle distance is, the higher the possibility that water drops, mud, and the like that are splashed by another vehicle adhere to the external sensor 6. Therefore, in order to prevent adhesion, in step S112, for example, when the inter-vehicle distance is less than a predetermined threshold or the inter-vehicle distance is shorter, the air blowing strength is changed to increase.

A target for changing the air blowing strength in step S 112 preferably includes at least an air curtain device for the external sensor 6 (for example, the front LiDAR 6Lf and the front camera 6Cf) that acquires the information in front of the vehicle 1, which is important in the following state. The targets for changing the air blowing strength in step S112 may be those for some of the external sensors 6 that acquire information in a direction in which the inter-vehicle distance between the vehicle 1 and the other vehicle is short. Specifically, when the inter-vehicle distance between the vehicle 1 and the other vehicle traveling in front of the vehicle 1 is short, an air blowing strength to the front LiDAR 6Lf and the front camera 6Cf may be increased, and when an inter-vehicle distance between the vehicle 1 and another vehicle traveling on a right side of the vehicle 1 is short, an air blowing strength to the right LiDAR 6Lr and the right camera 6Cr may be increased.

The processes in step S111 and S112 may be executed when the vehicle is not in the following state in the autonomous driving mode or in the manual driving mode. In this case, when compared under a situation that the travel speed and the inter-vehicle distance are the same, a first air blowing speed < the third air blowing strength, a second air blowing speed > the fourth air blowing strength.

When the vehicle 1 changes a lane, in step S113, for example, the cleaner control unit acquires lane change information indicating whether the vehicle 1 changes the lane from the vehicle control unit 3, and determines whether the vehicle 1 changes the lane. Specifically, the cleaner control unit determines whether the vehicle 1 changes the lane based on information about a lane obtained from an image captured by the front camera 6Cf, a steering control signal, and the like. The vehicle control unit 3 may determine whether the vehicle 1 changes the lane. In this case, the vehicle control unit 3 transmits information to the cleaner control unit in response to determining that the lane is changed.

In response to determining in step S113 that the vehicle 1 changes the lane (Yes in step S113), in step S114, the cleaner control unit operates the air curtain device at a fifth air blowing strength with respect to the external sensor 6 behind the vehicle 1. On the other hand, when the vehicle 1 does not change the lane in step S113 (No in step S113), the process in step S 114 is not executed.

The fifth air blowing strength is an air blowing strength higher than the above-described fourth air blowing strength. At the time of lane change, the importance of the external sensor 6 that acquires the information behind the vehicle 1 is higher than that in the case of the following state. Therefore, in the present embodiment, the air blowing strength for the external sensor 6, which is considered to be highly important at the time of lane change in the autonomous driving mode, is set to be higher than that in the following state in the autonomous driving mode.

As a specific example, in step S114, the third air curtain device 170 continuously blows air to the rear LiDAR 6Lb at the fifth air blowing strength. Similarly, the fourth air curtain device 190 continuously blows air to the rear camera Cb at the fifth air blowing strength. Here, the fifth air blowing strength of the third air curtain device 170 may be higher than the fourth air blowing strength of the third air curtain device 170, and may be the same as or different from the fourth air blowing strength of the fourth air curtain device 190. The same applies to the fifth air blowing strength of the fourth air curtain device 190.

In step S115, when the driving mode is switched to the manual driving mode (Yes in step S115), the cleaner control unit acquires, for example, information indicating that the driving mode is switched to the manual driving mode from the vehicle control unit 3, and the process proceeds to step S105. On the other hand, in the case of No in step S115, when stop conditions of the air curtain device are satisfied (for example, when the operation conditions are not satisfied or the engine is stopped), the cleaner control unit stops the air curtain device and ends a series of processes. The same applies to the case of No in step S 107.

### Third Embodiment

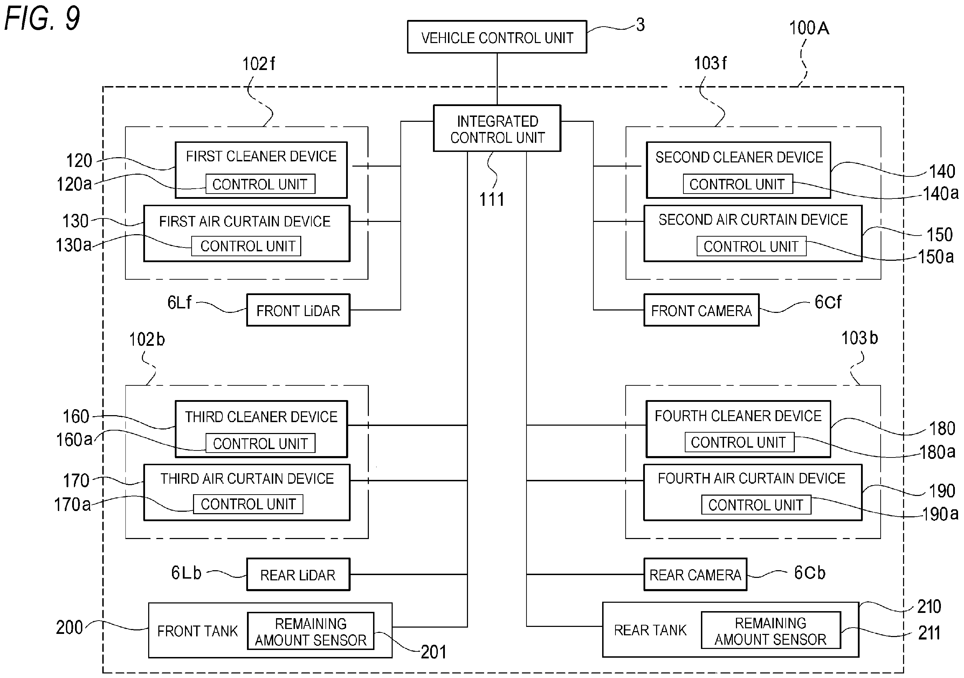

FIG. 9 is a block diagram of a cleaner system 100A according to a third embodiment of the present disclosure. The cleaner system 100A includes a front tank 200, a front-tank remaining amount sensor 201, a rear tank 210, and a rear-tank remaining amount sensor 211 in addition to the front LC102f, the front CC103f, the rear LC102b, the rear CC103b, and the integrated control unit 111 included in the cleaner system 100 according to the first embodiment shown in FIG. 3. The front tank 200 supplies cleaning liquid in the front tank 200 to, for example, the front WC101f, the front LC102f, the right LC102r, the left LC102l, the front CC103f, the right CC103r, the left CC103l, the right HC104r, and the left HC104l via a front pump (not shown). For example, the rear tank 210 supplies cleaning liquid in the rear tank 210 to the rear WW 101b, the rear LC102b, and the rear CC103b via a rear pump.

The front-tank remaining amount sensor 201 detects a remaining amount of the cleaning liquid in the front tank 200. The rear-tank remaining amount sensor 211 detects a remaining amount of the cleaning liquid in the rear tank 210. The remaining amount sensors 201 and 211 can appropriately use remaining amount sensors known in the related art. The remaining amount sensor 201 may detect, for example, a liquid surface of the cleaning liquid in the front tank 200, and may specify an absolute amount of the remaining amount of the cleaning liquid based on a detection result of the liquid surface, or may specify a relative amount (for example, a ratio of the remaining amount of the cleaning liquid to a full capacity of the front tank 200).

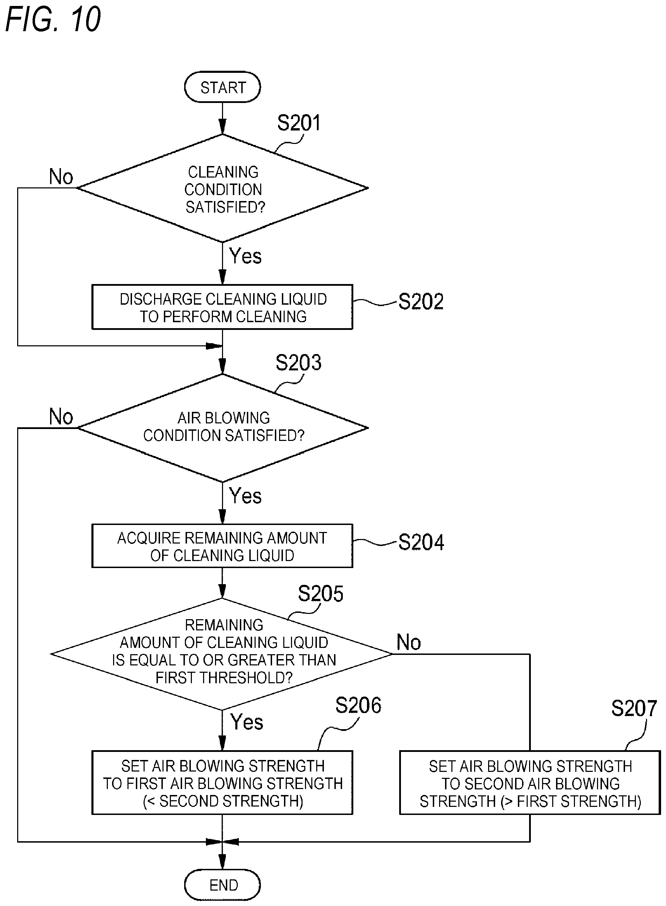

FIG. 10 is a flowchart showing an operation example of the cleaner system 100A according to the third embodiment. Specifically, FIG. 10 shows an example of operation control of each cleaner device and each air curtain device by the cleaner control unit.

In the present embodiment, each cleaner device discharges the cleaning liquid to the external sensor 6 to clean the external sensor 6 when predetermined cleaning conditions are satisfied. The cleaning conditions are not particularly limited, and, for example, is that dirt or the like that cannot be removed by the injection of air (wind) adheres to the external sensor 6. For example, the cleaner control unit determines a state of the external sensor 6 based on information from a dirt sensor (not shown) that detects dirt or the like of the external sensor 6, and discharges the cleaning liquid to the external sensor 6 in response to determining that the state of the external sensor 6 satisfies the cleaning conditions.

In response to determining that the external sensor 6 is dirty, the cleaner control unit may be configured to first inject air from the air nozzle of the cleaner device or the air curtain device to the external sensor 6 at least once. In this case, the cleaning condition may be that dirt or the like cannot be removed even by injection of air. One of the cleaning conditions may include that the driver of the vehicle 1 performs an operation for cleaning.

In the present embodiment, each air curtain device operates to continuously blow air to the external sensor 6 at a predetermined air blowing strength when predetermined air blowing conditions are satisfied. The air blowing conditions are not particularly limited, and may be, for example, conditions under which an adhesive material such as water drops or dirt is likely to adhere to the external sensor 6.

One of the preferable air blowing conditions is that the weather is rainy. When the weather is rainy, dirt such as falling raindrops, water drops and mud splashed from the road surface is likely to adhere to the external sensor 6. Therefore, when the weather is rainy, it is preferable to operate the air curtain device.

One of the preferable air blowing conditions is that the vehicle 1 is in the autonomous driving mode. In the autonomous driving mode, since various control signals such as an accelerator control signal are generated based on an output from the external sensor 6, it is significant to prevent the adhesion of dirt or the like to the external sensor 6.

In the present embodiment, the external sensor 6 is a camera and a LiDAR. Since the camera and the LiDAR are more likely to be influenced by an adhesive material such as water drops or dirt than the millimeter-wave radar or the like, it is significant to prevent the adhesion of the adhesive material by the air curtain device.

Steps S201 to S202 shown in FIG. 10 are processes related to control of the cleaner device.

As shown in FIG. 10, when the cleaner control unit determines that the cleaning conditions of the external sensor 6 are satisfied (Yes in step S201), in step S202, the cleaner control unit operates the cleaner device to discharge a specified amount of cleaning liquid to the external sensor 6 that satisfies the cleaning conditions to perform cleaning. The process in step S202 is executed every time the cleaning conditions of the external sensor 6 are satisfied.

Similarly, for objects to be cleaned other than the external sensor 6, when the cleaning conditions set for the objects to be cleaned (for example, the front window 1f, the rear window 1b, the right headlamp 7r, the left headlamp 7l, and the like) are satisfied, cleaning using the cleaning liquid may be executed by the corresponding cleaner device.

Steps S203 to S207 shown in FIG. 10 are processes related to control of the air curtain device. The processes in steps S203 to S207 and the processes in steps S201 to S202 described above may be executed independently of each other, and can also be executed in parallel.

When the cleaner control unit determines that the air blowing conditions of the external sensor 6 are satisfied (Yes in step S203), in step S204, the cleaner control unit acquires a remaining amount of the cleaning liquid. Specifically, the cleaner control unit acquires the remaining amount of the cleaning liquid in the front tank 200 from the remaining amount sensor 201, and acquires the remaining amount of the cleaning liquid in the rear tank 210 from the remaining amount sensor 211.

Next, in step S205, the cleaner control unit determines whether the remaining amounts of the cleaning liquid in the front tank 200 and the rear tank 210 are equal to or greater than a first threshold. The first threshold is a value for determining whether the remaining amount of the cleaning liquid is small, and may be appropriately set according to a capacity of a tank, the number of cleaner devices connected to the tank, and the like. The first threshold may be a different value or the same value for each tank.

In response to determining that the remaining amount of the cleaning liquid is equal to or greater than the first threshold (Yes in step S205), in step S206, the cleaner control unit operates the air curtain device by setting an air blowing strength to the first air blowing strength in the cleaner unit that receives the supply of the cleaning liquid from the determined tank. In response to determining that, for example, the remaining amount of the cleaning liquid in the front tank 200 is equal to or greater than the first threshold, the first air curtain device 130 and the second air curtain device 150 are operated to continuously blow air to the front LiDAR 6Lf and the front camera 6Cf at the first air blowing strength.

The first air blowing strength is an air blowing strength lower than a second air blowing strength to be described later. When there is a sufficient amount of cleaning liquid, the cleaning liquid may be used to clean the external sensor 6 even if an adhesive material such as mud or the like adhere to the external sensor 6. Therefore, there is little need to excessively prevent adhesion of dirt or the like to the external sensor 6 by increasing the air blowing strength. In the present disclosure, when there is a sufficient amount of cleaning liquid, by setting the air blowing strength to the first air blowing strength, the power consumption is reduced while preventing adhesion of dirt and the like to the external sensor 6 by the air curtain device.

On the other hand, in response to determining that the remaining amount of the cleaning liquid is less than the first threshold (No in step S205), in step S207, the cleaner control unit operates the air curtain device by setting an air blowing strength to the second air blowing strength in the cleaner unit that receives the supply of the cleaning liquid from the determined tank. In response to determining that, for example, the remaining amount of the cleaning liquid in the rear tank 210 is less than the first threshold, the third air curtain device 170 and the fourth air curtain device 190 are operated to continuously blow air to the rear LiDAR 6Lb and the rear camera 6Cb at the second air blowing strength.

The second air blowing strength is an air blowing strength higher than the above-described first air blowing strength. By operating the air curtain device at the second air blowing strength when the remaining amount of the cleaning liquid is small, it is possible to reduce the possibility that dirt requiring the cleaning liquid adheres to the external sensor 6 compared to a case where the air curtain device is operated at the first air blowing strength. That is, a frequency of operating the cleaner device is reduced, and as a result, it is possible to extend a period in which cleaning using the cleaning liquid is possible. According to the above configuration, it is possible to extend the period in which cleaning using the cleaning liquid is possible without reducing an amount of the cleaning liquid used. That is, it is possible to extend the period in which cleaning using the cleaning liquid is possible without deteriorating a cleaning performance of the cleaner device. From a viewpoint of further extending the period in which cleaning using the cleaning liquid is possible, when it is determined that the remaining amount of the cleaning liquid is less than the first threshold, the amount of the cleaning liquid used may be reduced.

After the process in step S206 or step S207, when the stop conditions of the air curtain device are satisfied (for example, when the air blowing conditions are not satisfied or the engine is stopped), the cleaner control unit stops the air curtain device and ends a series of processes.

In the operation example shown in FIG. 10, the air blowing strength is determined based on one threshold, and the threshold may be two or more. For example, a second threshold lower than the first threshold may be set, and when the remaining amount of the cleaning liquid is less than the second threshold, the air curtain device may be operated at a third air blowing strength higher than the second air blowing strength.

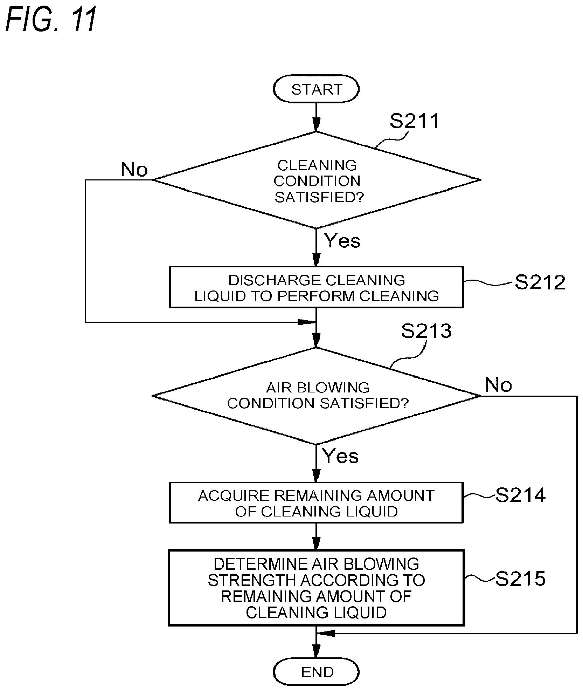

FIG. 11 is a flowchart showing another example of the operation example shown in FIG. 10. Since the processes in steps S211 to S214 in FIG. 11 are the same as the processes in steps S201 to S204 in FIG. 10, the description thereof will be omitted.

In the operation example shown in FIG. 11, in step S215, the cleaner control unit determines the air blowing strength of the air curtain device according to the remaining amount of the cleaning liquid. Specifically, in step S215, the cleaner control unit controls the air curtain device such that the air blowing strength increases as the remaining amount of the cleaning liquid decreases. In step S215, the air blowing strength may be increased stepwise according to the remaining amount of the cleaning liquid, or the air blowing strength may be increased continuously (for example, linearly) according to the remaining amount of the cleaning liquid, or the air blowing strength may be increased by combining these.

In the example shown in FIG. 11, the frequency of operating the cleaner device is also reduced, and as a result, it is also possible to extend the period in which cleaning using the cleaning liquid is possible. It is possible to extend the period in which cleaning using the cleaning liquid is possible without deteriorating the cleaning performance of the cleaner device.

### Fourth Embodiment

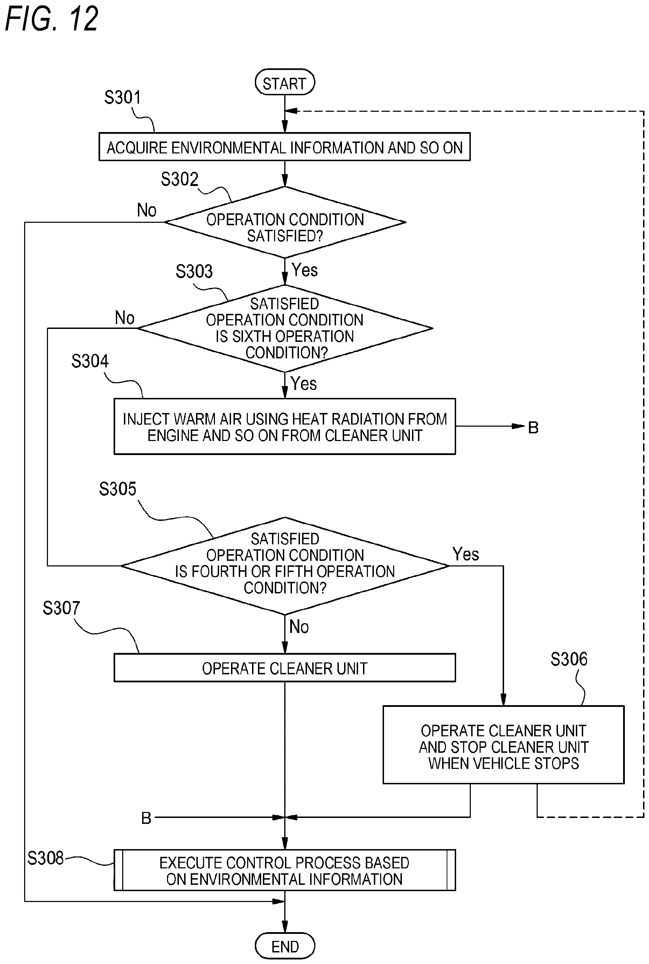

FIG. 12 is a flowchart showing an operation example of the cleaner system 100 according to a fourth embodiment of the present disclosure. First, in step S301, the cleaner control unit acquires the environmental information 11b and other information. The information acquired by the cleaner control unit in step S301 is information related to the operation conditions of each cleaner unit, and is used to determine whether the operation conditions are satisfied.

In the present embodiment, the operation conditions include first to sixth operation conditions. The first operation condition is that the cleaner control unit determines that the surroundings of the vehicle 1 are within a predetermined time after rain stops. If the road surface is wet or puddles are formed in the predetermined time after rain stops, water drops, mud, and the like are likely to adhere to the external sensor 6 due to splashing up from other vehicles traveling around the vehicle. Therefore, it is considered that there is great significance in operating the cleaner unit. Whether the first operation condition is satisfied can be determined based on, for example, a time after a wiper stops or weather information (for example, containing information about a time when rain has stopped) included in the environmental information 11b.

The second operation condition is that the cleaner control unit determines that frost or condensation exists in the surroundings. When frost or condensation exists in the surroundings, the frost or the condensation is likely to adhere to the external sensor 6. Therefore, it is considered that there is great significance in operating the cleaner unit. Whether the second operation condition is satisfied can be determined based on, for example, information from a temperature sensor or a humidity sensor. Whether the second operation condition is satisfied may be determined based on information from a condensation sensor.

The third operation condition is that the cleaner control unit determines that a temperature around the vehicle is less than a predetermined first threshold and a humidity around the vehicle exceeds a predetermined second threshold. The first threshold and the second threshold are, for example, boundary values at which condensation is considered to easily occur. When the third operation condition is satisfied, condensation is likely to adhere to the external sensor 6. Therefore, it is considered that there is great significance in operating the cleaner unit. Whether the third operation condition is satisfied can be determined based on, for example, information from a temperature sensor or a humidity sensor.

The fourth operation condition is that the cleaner control unit determines that an adhesive material adheres to a predetermined range or more of the external sensor 6. When the adhesive material adheres to the predetermined range or more of the external sensor 6, it is highly likely that the detection capability of the external sensor 6 deteriorates, and thus it is necessary to remove the adhesive material. Whether the fourth operation condition is satisfied can be determined, for example, based on information from the dirt sensor or an image captured by a camera, which is the external sensor 6. The fourth operation condition may further include that the vehicle 1 is traveling. In the following description, the fourth operation condition includes that the vehicle 1 is traveling.

The fifth operation condition is that the cleaner control unit determines that a wiper of the vehicle 1 is driven according to a detection result of the rain sensor of the vehicle 1. When the wiper of the vehicle 1 is driven according to the detection result of the rain sensor, it is highly likely that it is raining, and dirt such as water drops or mud is likely to adhere to the external sensor 6. The field of view of the driver is considered to be more limited than in fine weather. Accordingly, it is considered that it is significant to maintain the external sensor 6 in a clean state by operating the cleaner unit. The fifth operation condition may further include that the vehicle 1 is traveling. In the following description, the fifth operation condition includes that the vehicle 1 is traveling.

The sixth operation condition is that the cleaner control unit determines that the temperature around the vehicle 1 is less than a predetermined third threshold. The third threshold is, for example, a boundary value at which frozen dew tends to occur. When the sixth operation condition is satisfied, frozen dew is likely to adhere to the external sensor 6. Therefore, it is considered that there is great significance in operating the cleaner unit.

The operation conditions are not limited to the above example. The operation conditions can be, for example, conditions under which an adhesive material such as water drops or dirt is likely to adhere to the external sensor 6. Other operation conditions may be, for example, that the weather is rainy, that the vehicle 1 is in the autonomous driving mode, or the like.

In step S302, when the cleaner control unit determines that the operation conditions are not satisfied (No in step S302), the cleaner unit is not operated and the process ends. On the other hand, in step S302, when the cleaner control unit determines that the operation conditions are satisfied (Yes in step S302), the cleaner control unit operates the cleaner unit at a predetermined cleaning strength in step S303 and the subsequent steps.

Here, the cleaning strength indicates the degree of the strength of the cleaning. The cleaning strength can be defined by, for example, a type of the cleaning medium used for cleaning, an operation time of the cleaner unit, an amount of the cleaning medium, and a discharge strength. As an example of magnitude of the cleaning strength depending on the type of the cleaning medium, the cleaning liquid and the air are used in descending order of the cleaning strength. The cleaning strength is higher as the operation time of the cleaner unit is longer. Similarly, it can be said that the cleaning strength is higher as the amount of the cleaning medium or the discharge strength (for example, the air volume or the air speed) is higher.

The cleaning strength (that is, the cleaning medium to be used, the operation time, the amount of the cleaning medium, the discharge strength, and the like) of each cleaner unit can be determined based on the satisfied operation conditions. When the first to third operation conditions, the fifth and sixth operation conditions are satisfied, it is preferable that the cleaner control unit operates the air curtain device to continuously send wind to the external sensor 6, for example. By operating the air curtain device, a barrier due to air can be formed on a detection surface of the air curtain device, and adhesion of rain or mud to the external sensor 6 can be prevented. When the fourth operation condition is satisfied, for example, it is preferable that the cleaner control unit causes the cleaner device to inject the cleaning liquid or the air, for example, to remove the adhesive material.

The cleaner units to be operated in step S303 and the subsequent steps may be all or a part of the cleaner units corresponding to the external sensors 6. The cleaner control unit may determine a cleaner unit to be operated based on the satisfied operation condition. For example, a cleaner unit to be operated when the fourth operation condition is satisfied may be only a cleaner unit that cleans the external sensor 6 to which the adhesive material adheres in the predetermined range or more of the external sensor 6.

Each air curtain device included in the LC102 includes a pump (not shown) for supplying air to the air nozzle of the air curtain device. As another configuration example, each air curtain device included in the LC102 may share a pump. In the case of such a configuration, air can be supplied to all or a part of the LCs 102 determined to be operated by the pump. The same applies to each cleaner device included in the LC102, each cleaner device included in the CC103, and each air curtain device.

When the satisfied operation condition is the sixth operation condition (Yes in step S303), in step S304, the cleaner control unit controls the cleaner unit to inject warm air heated by heat radiation from an engine, a lamp, or a fuel cell mounted on the vehicle 1 to the external sensor 6. In step S304, for example, by continuously sending warm air from the air curtain device, adhesion of frozen dew to the external sensor 6 is prevented. After execution of step S304, the process proceeds to step S308 to be described later.

When the satisfied operation condition is the fourth or fifth operation condition (Yes in step S305), the cleaner control unit operates the cleaner unit in step S306, and the process proceeds to step S308 to be described later. When the vehicle 1 stops, the operation of the cleaner unit in step S306 also stops. When the vehicle 1 is stopped, since a degree of importance of the external sensor 6 is low, such control is performed from a viewpoint of reduction in power consumption or the like. When an operation of the cleaner unit is stopped, the process returns to step S301 as indicated by a dotted line. If the fourth or fifth operation condition is still satisfied when the vehicle starts traveling again, the cleaner unit operates again.

The stop of the vehicle 1 is a stop condition set for the fourth and fifth operation conditions. As described above, a stop condition for stopping the operation of the cleaner unit may be set as each operation condition.

When the satisfied operation conditions are the first to third operation conditions (No in step S305), the cleaner control unit operates the cleaner unit in step S307. In the present embodiment, a stop condition when the first to third operation conditions are satisfied is, for example, not the stop of the vehicle 1, but the first to third operation conditions are not satisfied.

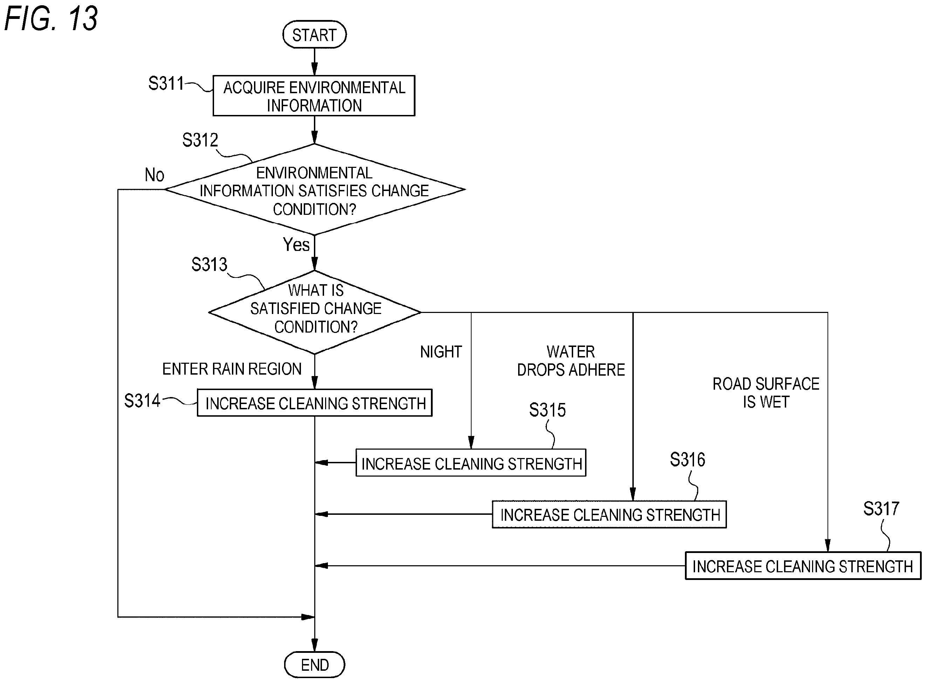

In step S308, the cleaner control unit controls the cleaning strength of the cleaner unit based on the environmental information 11b. Here, FIG. 13 is a flowchart showing an example of a control process based on the environmental information in step S308 in FIG. 12.

First, in step S311, the cleaner control unit acquires the environmental information 11b from the vehicle control unit 3, for example. Information included in the environmental information 11b acquired in step S311 may overlap information included in the environmental information 11b acquired in step S301. In step S311, the information included in the environmental information 11b acquired in step S301 may not be acquired.

When an environment around the vehicle 1 grasped according to the environmental information 11b acquired in step S311 does not satisfy the change condition for changing the cleaning strength (No in step S312), the cleaning strength is not changed, and the process ends.

On the other hand, when the cleaner control unit determines that the environment around the vehicle 1 satisfies the change condition for changing the cleaning strength (Yes in step S312), the cleaner control unit controls the cleaning strength based on the satisfied change condition.

One of the change conditions in the present embodiment is that the vehicle 1 enters a region indicated as raining in the weather information included in the environmental information 11b. When this change condition is satisfied ("entering a rain region" in step S313), in step S314, the cleaner control unit increases the cleaning strength of the operating cleaner unit. Specifically, the air speed and the air volume of the operating air curtain device are increased.

When the vehicle 1 enters the rain region, water, mud, and the like are likely to adhere to the external sensor 6. Accordingly, by increasing the air speed or the like of the air curtain device in such a case, adhesion of water, mud, or the like is easily prevented even in such a case. The cleaner control unit may acquire information indicating the strength of rain in the rain region as the weather information and further change the cleaning strength based on the strength of rain. In this case, it is preferable to increase the air speed and the air volume of the air curtain device as the strength of rain increases.

One of the change conditions in the present embodiment is that the current time is night. When this change condition is satisfied ("night" in step S313), in step S315, the cleaner control unit increases the cleaning strength of the operating cleaner unit. Specifically, the air speed and the air volume of the operating air curtain device are increased.

When water drops adhere to the external sensor 6 at night, light or the like from a headlamp of an oncoming car is reflected by the water drops, and it is considered that the detection capability of the external sensor 6 deteriorates as compared with when water drops adhere in daytime. Accordingly, in such a case, by increasing the air speed or the like of the air curtain device, the adhesion of water drops to the external sensor 6 can be further prevented, and the possibility of occurrence of such a situation can be reduced.

Whether the current time is night may be determined based on time information or may be determined based on an output from the illuminance sensor. In the case of using the illuminance sensor, it is possible to detect a case of entering a dark tunnel or the like, and in this case, it is also preferable to increase the cleaning strength.

One of the change conditions in the present embodiment is that water drops adhere to the external sensor 6. When this change condition is satisfied ("water drops adhere" in step S313), in step S316, the cleaner control unit increases the cleaning strength of the operating cleaner unit. Specifically, the air speed and the air volume of the operating air curtain device are increased.

When water drops adhere to the external sensor 6 even though the air curtain device is operated, it is considered that the air speed and the air volume of the air curtain device are not sufficient. Therefore, in such a case, it is preferable to increase the air speed and the air volume of the air curtain device.

The change condition may be that water drops adhere to the external sensor 6 in a state in which the vehicle 1 is stopped. This is because, since a barrier effect by the air curtain device is easily influenced by the vehicle speed, it is easier to determine whether the air speed and the air volume are appropriate in the state in which the vehicle 1 is stopped.

One of the change conditions in the present embodiment is that the road surface on which the vehicle 1 is traveling is wet. When this change condition is satisfied ("the road surface is wet" in step S313), in step S317, the cleaner control unit increases the cleaning strength of the operating cleaner unit. Specifically, the air speed and the air volume of the operating air curtain device are increased.

In a state in which the road surface is wet, water, mud, or the like is likely to adhere to the external sensor 6 due to splashing up from another vehicle. By increasing the air speed or the like of the air curtain device in such a case, adhesion of water, mud, or the like is easily prevented even in such a case.

Whether the road surface is wet may be determined based on, for example, whether water drops or mud adhere to a plurality of external sensors 6. For example, when water drops or mud adheres to the plurality of external sensors 6, the cleaner control unit determines that the road on which the vehicle 1 is traveling is wet, and increases the air speed or the like of the air curtain device with respect to the plurality of external sensors 6. In this case, the air curtain device may be stopped after a predetermined time has elapsed, and it may be determined again whether water drops or mud adhere to the plurality of external sensors 6. Whether the road surface is wet may be determined on a precondition that the weather information is not rain, or may be performed independently of the weather information.

After the processes in steps S314 to S317, the process ends in response to the fact that the stop condition of the cleaner unit is satisfied. The change condition of the cleaning strength is not limited to the change condition described with reference to FIG. 13, and various change conditions based on environmental information around the vehicle 1 can be set.

### Fifth Embodiment

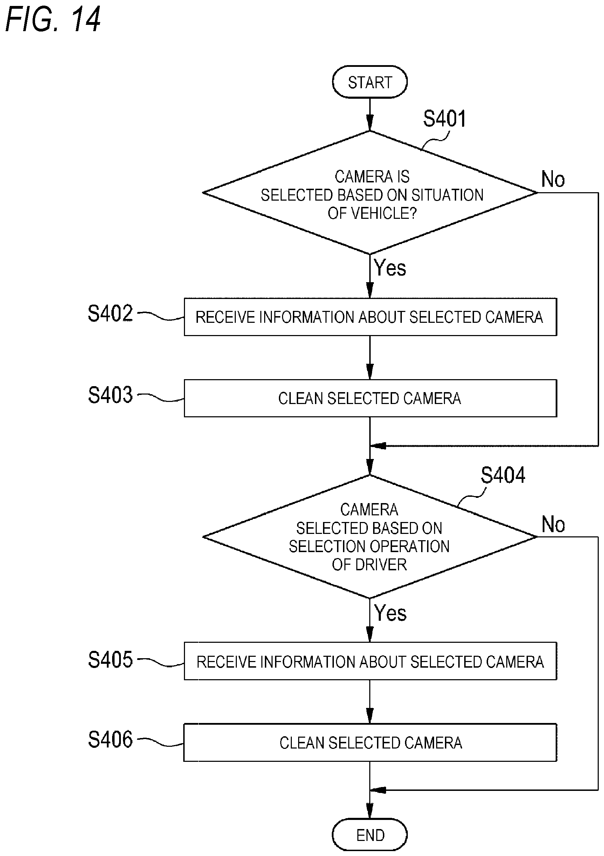

FIG. 14 is a flowchart showing an operation example of the cleaner system 100 according to a fifth embodiment. Specifically, FIG. 14 shows an example of operation control of the CC103 by the cleaner control unit.

As described above, the CC103 includes a front CC103f, a rear CC103b, a right CC103r, and a left CC103l. In the present embodiment, each CC103 includes a cleaner device and an air curtain device, and may include only one of the cleaner device and the air curtain device. When each CC103 includes only the cleaner device, the cleaner device preferably includes a liquid nozzle that discharges cleaning liquid and an air nozzle that discharges air.

When a camera is selected based on the situation of the vehicle 1 (Yes in step S401), in step S402, the cleaner control unit receives information for specifying the selected camera from the vehicle control unit 3. Next, in step S403, the cleaner control unit operates the CC103 corresponding to the selected camera to clean the selected camera. In step S403, the cleaner device may be operated or the air curtain device may be operated, and the cleaning medium used is preferably air. When the camera is not selected based on the situation of the vehicle 1 (No in step S401), the processes in steps S402 to S403 are not executed.

Here, "a camera is selected based on the situation of the vehicle 1" in step S401 means that the vehicle control unit 3 selects a camera based on the situation of the vehicle 1 in order to display an image on the display device (output unit) 8b.

The situation of the vehicle 1 is not particularly limited, and may be, for example, that the gear of the vehicle 1 is engaged with the back gear. In this case, the vehicle control unit 3 selects the rear camera 6Cb that captures an image behind the vehicle 1, and displays the image captured by the rear camera 6Cb on the display device 8b. The vehicle control unit 3 transmits the information to the cleaner control unit at substantially the same timing as a timing when the rear camera 6Cb is selected. Immediately after receiving the information in step S402, the cleaner control unit operates the rear CC103b in step S403 to clean the rear camera 6Cb. That is, the cleaner control unit controls the rear CC103b to start cleaning the rear camera 6Cb at substantially the same timing as a timing when the camera is selected by the vehicle control unit 3.

As another example of the situation of the vehicle 1, there is an obstacle in the vicinity of the vehicle 1. When there is an obstacle in the vicinity of the vehicle and there is a possibility that the vehicle 1 comes into contact with the obstacle, the vehicle control unit 3 selects a camera that captures an image of the obstacle, and displays the image captured by the camera on the display device 8b. The subsequent process is the same as in a case where the gear of the vehicle 1 is engaged with the back gear.

According to these examples, since the camera capturing the image displayed on the display device 8b can be cleaned without requiring an operation by a user, usability can be improved. Further, by starting the cleaning of the camera at substantially the same timing as the timing when the camera is selected by the vehicle control unit 3, a favorable image captured by a clean camera can be provided to the driver from a stage where the image starts to be displayed on the display device 8b.

When the camera is selected based on a selection operation of the driver (Yes in step S404), in step S405, the cleaner control unit receives information for specifying the selected camera from the vehicle control unit 3. Next, in step S406, the cleaner control unit operates the CC103 corresponding to the selected camera to clean the selected camera, and the process ends. The processes in steps S405 and S406 are the same as the processes in steps S402 and S403, respectively.

"A camera is selected based on a selection operation by the driver" in step S404 means, for example, that the driver selects a predetermined camera to display an image on the display device 8b. As an example of such selection, the driver may select an image in a specific direction in a state in which a 360-degree image is displayed on the display device 8b.

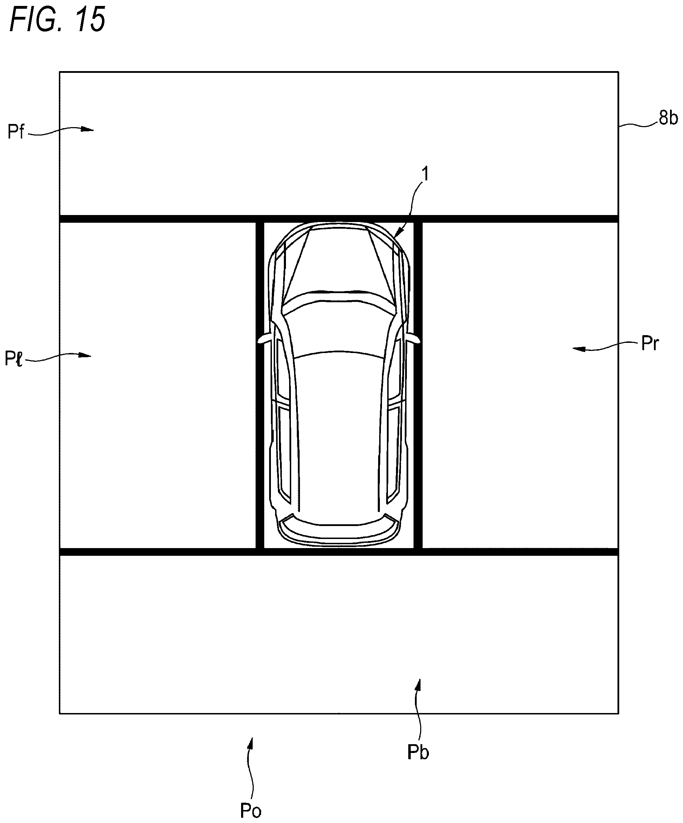

FIG. 15 is a schematic diagram showing an example of a display screen of the display device 8b. Specifically, FIG. 15 shows an example in which the 360-degree image Po is displayed on the display device 8b. Here, the "360-degree image" includes an image of 360-degree around the vehicle 1. The 360-degree image Po includes a front image Pf, a rear image Pb, a right image Pr, and a left image Pl of the vehicle 1 around the vehicle 1.

The front image Pr is an image captured by the front camera 6Cf. The rear image Pb is an image captured by the rear camera 6Cb. The right image Pr is an image captured by the right camera 6Cr. The left image Pl is an image captured by the left camera 6Cl. The 360-degree image Po is created by combining these images. That is, the front camera 6Cf, the rear camera 6Cb, the right camera 6Cr, and the left camera 6Cl are able to create the 360-degree image Po.

In the state shown in FIG. 15, when the driver performs an operation of selecting the front image Pf, for example, only the front image Pf is enlarged and displayed on the display device 8b. In this case, in response to the selection of the front image Pf, the vehicle control unit 3 transmits the information to the cleaner control unit. Immediately after receiving the information in step S405, the cleaner control unit operates the front CC103f in step S406 to clean the front camera 6Cf. The same applies to a case where another image is selected by the driver.

### Various Modifications

Although the present disclosure has been described in detail with reference to specific embodiments, it is obvious to those skilled in the art that various changes and modifications can be made without departing from the spirit and scope of the present disclosure. The number, positions, shape, and the like of constituent members described above are not limited to the above-described embodiments, and can be changed to the number, positions, shapes, and the like suitable for implementing the present disclosure. Elements included in configuration examples and operation examples according to the embodiments of the present disclosure can be combined with each other as long as no contradiction occurs.

In the present embodiment, the autonomous driving mode includes the fully autonomous driving mode, the advanced driver-assistance mode, and the driver-assistance mode, and the autonomous driving mode is not limited to these three modes. The autonomous driving mode may include at least one of the three modes. For example, the vehicle 1 may be able to execute only one of the three modes.

Further, the classification and display form of the driving mode of the vehicle may be appropriately changed according to laws or rules related to the autonomous driving in each country. Similarly, definitions of the "fully autonomous driving mode", the "advanced driver-assistance mode", and the "driver-assistance mode" described in the description of the present embodiment are merely examples, and the definitions may be appropriately changed in accordance with laws or rules relating to autonomous driving in each country.

Each cleaner unit may be individually provided, or a plurality of cleaner units may be unitized. For example, the right LC102r and the right HC104r may be configured as a single unit. In contrast to an aspect in which the right headlamp 7r and the right LiDAR 6Lr are integrated, the right LC102r and the right HC104r may be configured as a single unit.

In the above embodiment, an example in which the cleaner system 100 is mounted on the vehicle 1 has been described, but a mounting body on which the cleaner system 100 is mounted is not limited to the vehicle 1. The mounting body on which the cleaner system 100 is mounted may include the external sensor 6, and may be, for example, various moving bodies such as a drone, a traffic infrastructure such as a street light or a traffic light, or other installation bodies.

In the above embodiment, the vehicle 1 includes the four cameras of the front camera 6Cf, the rear camera 6Cb, the right camera 6Cr, and the left camera 6Cl, but the number of cameras may be more or less than four. In steps S403 and S406 in FIG. 14, a degree of the dirtiness of the camera may be detected by a dirt sensor or the like, and it may be determined whether to use cleaning liquid or air based on the degree of the dirtiness.

The present application is based on Japanese Patent Application No. 2021-061108 filed on Mar. 31, 2021, Japanese Patent Application No. 2021-061109 filed on Mar. 31, 2021, Japanese Patent Application No. 2021-061110 filed on Mar. 31, 2021, Japanese Patent Application No. 2021-061111 filed on Mar. 31, 2021, and Japanese Patent Application No. 2021-061112 filed on Mar. 31, 2021, the disclosure of which is hereby incorporated by reference herein.

## Claims

1. A cleaner system mounted on a vehicle including an external sensor configured to acquire information outside a vehicle, the cleaner system comprising:
a cleaning device configured to clean the external sensor or prevent adhesion of dirt to the external sensor by discharging a cleaning medium to the external sensor; and
a cleaner control unit configured to operate the cleaning device at a predetermined cleaning strength when a predetermined operation condition is satisfied, wherein
the cleaner control unit further acquires a travel situation of the vehicle and controls the cleaning strength based on the travel situation.

2. The cleaner system according to claim 1, wherein
the cleaner control unit is configured to acquire, as the travel situation, a traffic congestion situation of a road on which the vehicle is traveling, and
in a case where it is determined that the road is congested based on the traffic congestion situation, when the operation condition is satisfied, the cleaner control unit performs control such that the cleaning strength is lower than that in a case where it is determined that the road is not congested.

3. The cleaner system according to claim 1 or claim 2, wherein
the cleaner control unit is configured to acquire, as the travel situation, a curve situation of a road on which the vehicle is traveling, and
in a case where it is determined that the road is curved based on the curve situation, when the operation condition is satisfied, the cleaner control unit performs control such that the cleaning strength is higher than that in a case where it is determined that the road is not curved.

4. The cleaner system according to any one of claims 1 to 4, wherein
the cleaner control unit is configured to determine, based on information acquired from the external sensor or a GPS sensor mounted on the vehicle, whether a place where the vehicle is traveling is a place where the number of insects that adhere to the external sensor is estimated to be a predetermined number or more, and
the operation condition includes determining that the place where the vehicle is traveling is the place where the number of insects is estimated to be the predetermined number or more.

5. The cleaner system according to any one of claims 1 to 4, wherein
the cleaner control unit is configured to acquire a situation of a gear of the vehicle as the travel situation, and
when the gear of the vehicle is engaged with a back gear, the cleaner control unit performs control such that the cleaning strength is higher than that before the gear of the vehicle is engaged with the back gear.

6. The cleaner system according to any one of claims 1 to 5, wherein
the cleaner control unit is configured to acquire, as the travel situation, at least one of information related to whether the vehicle changes a lane and information related to whether the vehicle is at a junction of a road, and
when it is determined that the vehicle changes a lane or the vehicle is at the junction, the cleaner control unit performs control such that the cleaning strength is higher than that before the determination is made.

7. The cleaner system according to any one of claims 1 to 6, further comprising:
an air curtain device configured to continuously blow air to the external sensor at a predetermined air blowing strength to prevent adhesion of dirt to the external sensor, as the cleaning device.

8. The cleaner system according to claim 7, wherein
the vehicle includes a millimeter-wave radar configured to acquire information outside the vehicle, and
the cleaner control unit performs control such that, when a first monitoring region monitored by the external sensor and a second monitoring region monitored by the millimeter-wave radar overlap, the cleaning strength for the external sensor monitoring the first monitoring region is lower than that when the first monitoring region and the second monitoring region do not overlap.

9. A program executed by a computer mounted on a vehicle including an external sensor configured to acquire information outside the vehicle, wherein
the vehicle includes a cleaning device configured to clean the external sensor or prevent adhesion of dirt to the external sensor by discharging a cleaning medium to the external sensor, and
the program causes a cleaner control unit of the computer to execute:
a step of operating the cleaning device at a predetermined cleaning strength when a predetermined operation condition is satisfied;
a step of acquiring a travel situation of the vehicle; and
a step of controlling the cleaning strength based on the travel situation.

10. A cleaner control method executed by a computer mounted on a vehicle including an external sensor configured to acquire information outside the vehicle, wherein
the vehicle includes a cleaning device configured to clean the external sensor or prevent adhesion of dirt to the external sensor by discharging a cleaning medium to the external sensor,
the cleaner control method comprises:
by a cleaner control unit of the computer,
a step of operating the cleaning device at a predetermined cleaning strength when a predetermined operation condition is satisfied;
a step of acquiring a travel situation of the vehicle; and
a step of controlling the cleaning strength based on the travel situation.

11. A vehicle comprising:
an external sensor configured to acquire information outside a vehicle;
a cleaning device configured to clean the external sensor or prevent adhesion of dirt to the external sensor by discharging a cleaning medium to the external sensor; and
a cleaner control unit configured to operate the cleaning device at a predetermined cleaning strength when a predetermined operation condition is satisfied, wherein
the cleaner control unit further acquires a travel situation of the vehicle and controls the cleaning strength based on the travel situation.

12. A cleaner system mounted on a vehicle, the vehicle including a vehicle control unit configured to selectively execute, as a driving mode, an autonomous driving mode in which control is performed such that the vehicle performs at least one of an acceleration operation, a deceleration operation, and a steering operation based on an output of at least one external sensor configured to acquire information outside the vehicle and a manual driving mode in which a driver drives and operates the vehicle, the cleaner system comprising:
at least one air curtain device configured to continuously blow air to the external sensor at a predetermined air blowing strength and prevent adhesion of dirt to the external sensor; and
a cleaner control unit configured to control the air curtain device to operate when a predetermined operation condition is satisfied, wherein
the cleaner control unit further controls the air blowing strength based on the driving mode.

13. The cleaner system according to claim 12, wherein
the cleaner control unit performs control such that the air blowing strength for the external sensor configured to acquire information in front of the vehicle is higher during execution of the autonomous driving mode than that during execution of the manual driving mode.

14. The cleaner system according to claim 12 or claim 13, wherein
during execution of the autonomous driving mode, that is, when the vehicle is in a following state in which the vehicle follows a preceding vehicle traveling in front of the vehicle,
the cleaner control unit performs control such that the air blowing strength for the external sensor configured to acquire information behind the vehicle is lower than that during execution of the manual driving mode.

15. The cleaner system according to any one of claims 12 to 14, wherein
during execution of the autonomous driving mode, that is, when a steering control signal generated based on an output of the external sensor includes a control signal for causing the vehicle to change a lane,
the cleaner control unit performs control such that the air blowing strength for the external sensor configured to acquire information behind the vehicle is higher than that when the vehicle is in a following state in which the vehicle follows a preceding vehicle traveling in front of the vehicle.

16. The cleaner system according to any one of claims 12 to 15, wherein
during execution of the autonomous driving mode,
the cleaner control unit further controls the air blowing strength based on at least one of a travel speed of the vehicle and an inter-vehicle distance between the vehicle and a surrounding vehicle traveling around the vehicle.

17. The cleaner system according to any one of claims 12 to 16, wherein
the operation condition include that an ignition is turned on, and
the cleaner control unit controls the air curtain device to blow air at an air blowing strength for cleaning set for cleaning dirt on the external sensor until a predetermined time elapses after the ignition is turned on.

18. The cleaner system according to any one of claims 1 to 8 and claims 12 to 17, wherein
the cleaner control unit is configured to acquire weather information around the vehicle, and
the operation condition includes that the weather information is rain.

19. A program executed by a computer mounted on a vehicle, the vehicle including a vehicle control unit configured to selectively execute, as a driving mode, an autonomous driving mode in which control is performed such that the vehicle performs at least one of an acceleration operation, a deceleration operation, and a steering operation based on an output of at least one external sensor configured to acquire information outside the vehicle and a manual driving mode in which a driver drives and operates the vehicle, wherein
the vehicle includes at least one air curtain device configured to continuously blow air to the external sensor at a predetermined air blowing strength and prevent adhesion of dirt to the external sensor, and
the program causes a cleaner control unit of the computer to execute:
a step of controlling the air curtain device to operate when a predetermined operation condition is satisfied; and
a step of controlling the air blowing strength based on the driving mode.

20. A cleaner control method executed by a computer mounted on a vehicle, the vehicle including a vehicle control unit configured to selectively execute, as a driving mode, an autonomous driving mode in which control is performed such that the vehicle performs at least one of an acceleration operation, a deceleration operation, and a steering operation based on an output of at least one external sensor configured to acquire information outside the vehicle and a manual driving mode in which a driver drives and operates the vehicle, wherein
the vehicle includes at least one air curtain device configured to continuously blow air to the external sensor at a predetermined air blowing strength and prevent adhesion of dirt to the external sensor, and
the cleaner control method comprises:
by a cleaner control unit of the computer,
a step of controlling the air curtain device to operate when a predetermined operation condition is satisfied; and
a step of controlling the air blowing strength based on the driving mode.

21. A vehicle comprising:
a vehicle control unit configured to selectively execute, as a driving mode, an autonomous driving mode in which control is performed such that the vehicle performs at least one of an acceleration operation, a deceleration operation, and a steering operation based on an output of at least one external sensor configured to acquire information outside the vehicle and a manual driving mode in which a driver drives and operates the vehicle;
at least one air curtain device configured to continuously blow air to the external sensor at a predetermined air blowing strength and prevent adhesion of dirt to the external sensor; and
a cleaner control unit configured to control the air curtain device to operate when a predetermined operation condition is satisfied, wherein
the cleaner control unit further controls the air blowing strength based on the driving mode.

22. A cleaner system mounted on a mounting body including an external sensor configured to acquire information outside the mounting body, the cleaner system comprising:
a cleaning device configured to clean the external sensor by discharging cleaning liquid when a predetermined cleaning condition is satisfied;
an air curtain device configured to continuously blow air to the external sensor at a predetermined air blowing strength to prevent adhesion of dirt to the external sensor when a predetermined air blowing condition is satisfied; and
a cleaner control unit configured to control operations of the cleaning device and the air curtain device, wherein
the cleaner control unit is configured to
set the air blowing strength to a first strength when the air blowing condition is satisfied and a remaining amount of the cleaning liquid is equal to or greater than a first threshold, and
set the air blowing strength to a second strength higher than the first strength when the air blowing condition is satisfied and the remaining amount of the cleaning liquid is less than the first threshold.

23. A cleaner system mounted on a mounting body including an external sensor configured to acquire information outside the mounting body, the cleaner system comprising:
a cleaning device configured to clean the external sensor by discharging cleaning liquid when a predetermined cleaning condition is satisfied;
an air curtain device configured to continuously blow air to the external sensor at a predetermined air blowing strength to prevent adhesion of dirt to the external sensor when a predetermined air blowing condition is satisfied; and
a cleaner control unit configured to control operations of the cleaning device and the air curtain device, wherein
the cleaner control unit performs control such that the air blowing strength increases as a remaining amount of the cleaning liquid decreases.

24. The cleaner system according to claim 22 or claim 23, wherein
the mounting body is a vehicle,
the vehicle is configured to execute an autonomous driving mode in which an accelerator control signal, a brake control signal, and a steering control signal are generated according to an output of the external sensor, and
the air blowing condition includes that the autonomous driving mode is being executed.

25. The cleaner system according to any one of claims 22 to 24, wherein
the cleaner control unit is configured to acquire weather information around the vehicle, and
the air blowing condition includes that the weather information is rain.

26. A program executed by a computer mounted on a mounting body including an external sensor configured to acquire information outside the mounting body, wherein
the mounting body includes
a cleaning device configured to clean the external sensor by discharging cleaning liquid, and
an air curtain device configured to continuously blow air to the external sensor at a predetermined air blowing strength to prevent adhesion of dirt to the external sensor,
the program causes a cleaner control unit of the computer to execute:
a first step of controlling the cleaning device to operate when a predetermined cleaning condition is satisfied; and
a second step of controlling the air curtain device to operate when a predetermined air blowing condition is satisfied, and
the second step includes setting the air blowing strength to a first strength when a remaining amount of the cleaning liquid is equal to or greater than a first threshold, and setting the air blowing strength to a second strength higher than the first strength when the remaining amount of the cleaning liquid is less than the first threshold.

27. A program executed by a computer mounted on a mounting body including an external sensor configured to acquire information outside the mounting body, wherein
the mounting body includes
a cleaning device configured to clean the external sensor by discharging cleaning liquid, and
an air curtain device configured to continuously blow air to the external sensor at a predetermined air blowing strength to prevent adhesion of dirt to the external sensor,
the program causes a cleaner control unit of the computer to execute:
a first step of controlling the cleaning device to operate when a predetermined cleaning condition is satisfied; and
a second step of controlling the air curtain device to operate when a predetermined air blowing condition is satisfied, and
the second step includes performing control such that the air blowing strength increases as a remaining amount of the cleaning liquid decreases.

28. A cleaner control method executed by a computer mounted on a mounting body, the mounting body including
an external sensor configured to acquire information outside the mounting body,
a cleaning device configured to clean the external sensor by discharging cleaning liquid, and
an air curtain device configured to continuously blow air to the external sensor at a predetermined air blowing strength to prevent adhesion of dirt to the external sensor, the cleaner control method comprising:
by a cleaner control unit of the computer,
a first step of controlling the cleaning device to operate when a predetermined cleaning condition is satisfied; and
a second step of controlling the air curtain device to operate when a predetermined air blowing condition is satisfied, wherein
the second step includes setting the air blowing strength to a first strength when a remaining amount of the cleaning liquid is equal to or greater than a first threshold, and setting the air blowing strength to a second strength higher than the first strength when the remaining amount of the cleaning liquid is less than the first threshold.

29. A cleaner control method executed by a computer mounted on a mounting body, the mounting body including
an external sensor configured to acquire information outside the mounting body,
a cleaning device configured to clean the external sensor by discharging cleaning liquid, and
an air curtain device configured to continuously blow air to the external sensor at a predetermined air blowing strength to prevent adhesion of dirt to the external sensor, the cleaner control method comprising:
by a cleaner control unit of the computer,
a first step of controlling the cleaning device to operate when a predetermined cleaning condition is satisfied; and
a second step of controlling the air curtain device to operate when a predetermined air blowing condition is satisfied, wherein
the second step includes performing control such that the air blowing strength increases as a remaining amount of the cleaning liquid decreases.

30. A mounting body comprising:
an external sensor configured to acquire information outside the mounting body;
a cleaning device configured to clean the external sensor by discharging cleaning liquid when a predetermined cleaning condition is satisfied;
an air curtain device configured to continuously blow air to the external sensor at a predetermined air blowing strength to prevent adhesion of dirt to the external sensor when a predetermined air blowing condition is satisfied; and
a cleaner control unit configured to control operations of the cleaning device and the air curtain device, wherein
the cleaner control unit is configured to
set the air blowing strength to a first strength when the air blowing condition is satisfied and a remaining amount of the cleaning liquid is equal to or greater than a first threshold, and
set the air blowing strength to a second strength higher than the first strength when the air blowing condition is satisfied and the remaining amount of the cleaning liquid is less than the first threshold.

31. A mounting body comprising:
an external sensor configured to acquire information outside the mounting body;
a cleaning device configured to clean the external sensor by discharging cleaning liquid when a predetermined cleaning condition is satisfied;
an air curtain device configured to continuously blow air to the external sensor at a predetermined air blowing strength to prevent adhesion of dirt to the external sensor when a predetermined air blowing condition is satisfied; and
a cleaner control unit configured to control operations of the cleaning device and the air curtain device, wherein
the cleaner control unit performs control such that the air blowing strength increases as a remaining amount of the cleaning liquid decreases.

32. A cleaner system mounted on a mounting body including an external sensor configured to acquire information outside the mounting body, the cleaner system comprising:
a cleaning device configured to clean the external sensor or prevent adhesion of dirt to the external sensor by discharging a cleaning medium to the external sensor; and
a cleaner control unit configured to operate the cleaning device at a predetermined cleaning strength when a predetermined operation condition is satisfied, wherein
the cleaner control unit further acquires environmental information around the mounting body, and controls the cleaning strength based on the environmental information.

33. The cleaner system according to claim 32, wherein
the environmental information includes weather information around the mounting body, and
when it is determined that the mounting body has entered a region indicated by the weather information as being raining, the cleaner control unit performs control such that the cleaning strength is higher than that before the determination.

34. The cleaner system according to claim 32 or claim 33, wherein
the environmental information includes information that enables determination of whether the surroundings of the mounting body are within a predetermined time after rain stops, and
the operation condition includes, as a first operation condition, that the cleaner control unit determines that the surroundings of the mounting body are within the predetermined time after the rain stops.

35. The cleaner system according to any one of claims 32 to 34, wherein
the environmental information includes information that enables determination of whether a current time is night, and
when it is determined that the current time is night, the cleaner control unit performs control such that the cleaning strength is higher than that when it is determined that the current time is not night.

36. The cleaner system according to any one of claims 32 to 35, wherein
the environmental information includes information that enables determination of whether frost or condensation exists in the surroundings of the mounting body, and
the operation condition includes a second operation condition in which the cleaner control unit determines that frost or condensation exists in the surroundings of the mounting body.

37. The cleaner system according to any one of claims 32 to 36, wherein
the environmental information includes information related to temperature and humidity around the mounting body, and
the operation condition includes a third operation condition that a temperature around the mounting body is less than a predetermined first threshold and a humidity around the mounting body exceeds a predetermined second threshold.

38. The cleaner system according to any one of claims 32 to 37, wherein
the environmental information includes information that enables determination of whether water drops adhere to the external sensor, and
when it is determined that water drops adhere to the external sensor, the cleaner control unit performs control such that the cleaning strength is higher than that before the determination.

39. The cleaner system according to any one of claims 32 to 38, wherein
the operation condition includes at least one of a fourth operation condition and a fifth operation condition,
the fourth operation condition is that an adhesive material adheres to a predetermined range or more of the external sensor,
the fifth operation condition is that a wiper of the mounting body is driven according to a detection result of a rain sensor of the moving body, and
when the fourth operation condition or the fifth operation condition is satisfied, the cleaner control unit operates the cleaning device until a predetermined stop condition is satisfied.

40. The cleaner system according to any one of claims 32 to 39, wherein
the environmental information includes information that enables determination of a road surface situation of a road on which the mounting body is located, and
when it is determined that the road is wet, the cleaner control unit performs control such that the cleaning strength is higher than that when it is determined that the road is not wet.

41. The cleaner system according to any one of claims 32 to 40, wherein
the mounting body is a vehicle,
the environmental information includes information related to a temperature around the vehicle,
the operation condition includes a sixth operation condition that a temperature around the vehicle is less than a predetermined third threshold, and
when the sixth operation condition is satisfied, the cleaner control unit controls the cleaning device to discharge warm air heated by heat radiation from an engine, a lamp, or a fuel cell mounted on the vehicle to the external sensor as the cleaning medium.

42. The cleaner system according to any one of claims 32 to 41, wherein
the mounting body is a vehicle,
the vehicle includes a plurality of external sensors, and
when water drops or mud adheres to the plurality of external sensors, the cleaner control unit determines that a road on which the vehicle is traveling is wet, and operates the cleaning device for the plurality of external sensors until a predetermined time elapses.

43. The cleaner system according to any one of claims 32 to 42, further comprising:
an air curtain device configured to continuously blow air to the external sensor at a predetermined air blowing strength to prevent adhesion of dirt to the external sensor, as the cleaning device.

44. The cleaner system according to any one of claims 1 to 8, claims 12 to 18, claims 22 to 25, and claims 32 to 43, wherein
the external sensor is at least one of a camera and a LiDAR.

45. A program executed by a computer mounted on a mounting body including an external sensor configured to acquire information outside the mounting body, wherein
the mounting body includes a cleaning device configured to clean the external sensor or prevent adhesion of dirt to the external sensor by discharging a cleaning medium to the external sensor, and
the program causes a cleaner control unit of the computer to execute:
a step of operating the cleaning device at a predetermined cleaning strength when a predetermined operation condition is satisfied;
a step of acquiring environmental information around the mounting body; and
a step of controlling the cleaning strength based on the environmental information.

46. A cleaner control method executed by a computer mounted on a mounting body including an external sensor configured to acquire information outside the mounting body, wherein
the mounting body includes a cleaning device configured to clean the external sensor or prevent adhesion of dirt to the external sensor by discharging a cleaning medium to the external sensor, and
the cleaner control method comprises:
by a cleaner control unit of the computer,
a step of operating the cleaning device at a predetermined cleaning strength when a predetermined operation condition is satisfied;
a step of acquiring environmental information around the mounting body; and
a step of controlling the cleaning strength based on the environmental information.

47. A mounting body comprising:
an external sensor configured to acquire information outside a mounting body;
a cleaning device configured to clean the external sensor or prevent adhesion of dirt to the external sensor by discharging a cleaning medium to the external sensor; and
a cleaner control unit configured to operate the cleaning device at a predetermined cleaning strength when a predetermined operation condition is satisfied, wherein
the cleaner control unit further acquires environmental information around the mounting body and controls the cleaning strength based on the environmental information.

48. A cleaner system mounted on a vehicle, the vehicle including a plurality of cameras configured to capture an image of an outside of a vehicle and a display device configured to display images captured by the plurality of cameras, the cleaner system comprising:
a cleaning device configured to clean each of the cameras by discharging a cleaning medium to the camera; and
a cleaner control unit configured to control an operation of the cleaning device, wherein
the display device displays an image captured by a camera selected based on a situation of the vehicle or a selection operation by a driver of the vehicle, and
the cleaner control unit controls the cleaning device to clean the selected camera.

49. The cleaner system according to claim 48, wherein
the cleaner control unit controls the cleaning device to start cleaning the selected camera at a timing when the selection is performed.

50. The cleaner system according to claim 48 or claim 49, wherein
a situation of the vehicle includes whether a gear of the vehicle is engaged with a back gear, and
when the gear of the vehicle is engaged with the back gear, a camera that captures an image behind the vehicle is selected, and an image captured by the camera is displayed on the display device.

51. The cleaner system according to any one of claims 48 to 50, wherein
a situation of the vehicle includes whether there is an obstacle in the vicinity of the vehicle, and
when there is an obstacle in the vicinity of the vehicle, a camera that captures an image of the obstacle is selected, and an image captured by the camera is displayed on the display device.

52. The cleaner system according to any one of claims 48 to 51, wherein
the plurality of cameras are configured to create a 360-degree image.

53. A program executed by a computer mounted on a vehicle, the vehicle including a plurality of cameras configured to capture an image of an outside of a vehicle and a display device configured to display images captured by the plurality of cameras, wherein
the vehicle includes a cleaning device configured to clean each of the cameras by discharging a cleaning medium to the camera,
the display device displays an image captured by a camera selected based on a situation of the vehicle or a selection operation by a driver of the vehicle, and
the program causes a cleaner control unit of the computer to execute a step of controlling the cleaning device to clean the selected camera.

54. A cleaner control method executed by a computer mounted on a vehicle, the vehicle including a plurality of cameras configured to capture an image of an outside of a vehicle and a display device configured to display images captured by the plurality of cameras, wherein
the vehicle includes a cleaning device configured to clean each of the cameras by discharging a cleaning medium to the camera,
the display device displays an image captured by a camera selected based on a situation of the vehicle or a selection operation by a driver of the vehicle, and
the cleaner control method comprises:
a step of controlling the cleaning device to clean the selected camera by a cleaner control unit of the computer.

55. A vehicle comprising:
a plurality of cameras configured to capture an image of an outside of a vehicle;
a display device configured to display images captured by the plurality of cameras;
a cleaning device configured to clean each of the cameras by discharging a cleaning medium to the camera; and
a cleaner control unit configured to control an operation of the cleaning device, wherein
the display device displays an image captured by a camera selected based on a situation of the vehicle or a selection operation by a driver of the vehicle, and
the cleaner control unit controls the cleaning device to clean the selected camera.
